(19) Europäisches Patentamt
European Patent Office
Office européen des brevets

(11) **EP 2 782 876 B1**

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(51) Int Cl.:
***C03B 19/14*** *(2006.01)*     ***C03B 37/014*** *(2006.01)*
***C03B 37/018*** *(2006.01)*

(21) Anmeldenummer: **12794914.7**

(22) Anmeldetag: **22.11.2012**

(86) Internationale Anmeldenummer:
**PCT/EP2012/073340**

(87) Internationale Veröffentlichungsnummer:
**WO 2013/076192 (30.05.2013 Gazette 2013/22)**

(54) **VERFAHREN ZUR HERSTELLUNG VON SYNTHETISCHEM QUARZGLAS DURCH ABSCHEIDUNG VON SILICASSOOT AUS DER DAMPFPHASE AUF EINER UNTERLAGE**

METHOD FOR PRODUCING SYNTHETIC QUARTZ GLASS BY DEPOSITION OF SiO2 SOOT FROM THE VAPOR PHASE ON A SUPPORT

PROCÉDÉ DE PRODUCTION DE VERRE DE SILICE SYNTHÉTIQUE PAR DÉPÔT DE SUIE DE SIO2 ISSUE DE LA PHASE VAPEUR SUR UN SUBSTRAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2011   DE 102011119373**
**09.12.2011   US 201161569114 P**

(43) Veröffentlichungstag der Anmeldung:
**01.10.2014   Patentblatt 2014/40**

(73) Patentinhaber: **Heraeus Quarzglas GmbH & Co. KG**
**63450 Hanau (DE)**

(72) Erfinder: **FABIAN, Heinz**
**63762 Großostheim (DE)**

(74) Vertreter: **Staudt, Armin Walter**
**Sandeldamm 24a**
**63450 Hanau (DE)**

(56) Entgegenhaltungen:
**EP-A1- 1 329 429          WO-A1-90/10596**
**WO-A1-2004/065314   US-A- 5 043 002**
**US-A- 5 735 921          US-A- 5 879 649**

EP 2 782 876 B1

**Beschreibung**

Die vorliegende Erfindung betrifft ein Verfahren zur Herstellung von synthetischem Quarzglas, umfassend die Verfahrensschritte:

(a) Bereitstellen eines flüssigen $SiO_2$-Einsatzmaterials, das als Hauptkomponente Octamethylcyclotetrasiloxan D4 enthält,
(b) Verdampfen des $SiO_2$-Einsatzmaterials in einen Einsatzmaterialdampf,
(c) Umsetzen des Einsatzmaterialdampfes zu $SiO_2$-Partikeln,
(d) Abscheiden der $SiO_2$- Partikel auf einer Ablagerungsfläche unter Bildung eines porösen $SiO_2$-Sootkörpers,
(e) Verglasen des $SiO_2$-Sootkörpers unter Bildung des synthetischen Quarzglases.

Stand der Technik

Zur Herstellung von synthetischem Quarzglas für kommerzielle Anwendungen werden aus einer siliziumhaltigen Ausgangssubstanz in einem CVD-Verfahren (chemische Gasphasenabscheidung) durch Hydrolyse und/oder Oxidation $SiO_2$-Partikel erzeugt und diese auf einem Träger niedergeschlagen. Dabei kann zwischen Außenabscheideverfahren und Innenabscheideverfahren unterschieden werden. Bei den Außenabscheideverfahren werden $SiO_2$-Partikel auf der Außenseite eines rotierenden Trägers aufgebracht. Als Beispiele seien das so genannte OVD-Verfahren (outside vapour phase deposition), das VAD-Verfahren (vapour phase axial deposition) oder das PECVD-Verfahren (plasma enhanced chemical vapour deposition) genannt. Als bekanntestes Beispiel für ein Innenabscheideverfahren steht das MCVD-Verfahren (modified chemical vapour deposition), bei dem auf der Innenwandung eines von außen erhitzten Rohres $SiO_2$-Partikel abgeschieden werden.

Bei hinreichend hoher Temperatur im Bereich der Trägeroberfläche kommt es zu einem unmittelbaren Verglasen der $SiO_2$-Partikel ("Direktverglasen"). Ein Beispiel dafür ist die in der US 5,043,002 beschriebene "Boule-Herstellung". Dabei werden $SiO_2$-Partikel mittels Abscheidebrennern, die von oben in eine rotierende Form gerichtet sind, abgeschieden und direkt verglast, so dass in der Form ein Quarzglaskörper ("Boule") vertikal von unten nach oben aufgebaut wird.

Im Unterschied dazu ist bei dem so genannten "Sootverfahren" die Temperatur während des Abscheidens der $SiO_2$-Partikel so niedrig, dass eine poröse Sootschicht erhalten wird, die in einem separaten Verfahrensschritt zu transparentem Quarzglas gesintert wird. Ein Beispiel dafür ist das aus der DE 10 2007 024 725 A1 bekannte OVD-Verfahren, bei dem einem Abscheidebrenner Brenngase in Form von Wasserstoff und Sauerstoff, sowie eine siliziumhaltige Ausgangsverbindung zugeführt, die in einer dem Abscheidebrenner zugeordneten Brennerflamme zu $SiO_2$-Partikeln umgesetzt wird, welche unter reversierender Bewegung des Abscheidebrenners entlang eines um seine Längsachse rotierenden Trägers schichtweise unter Bildung eines $SiO_2$-Rohlings abgeschieden werden.

Bei einer auf höhere Produktivität abzielenden Abwandlung des Sootverfahrens wird anstelle nur eines Abscheidebrenners eine Vielzahl von Abscheidebrennern eingesetzt, die zur Soot-Abscheidung in einer gemeinsamen Brennerreihe entlang des rotierenden Trägers reversierend hin- und herbewegt werden. Dabei überstreicht jede der Brennerflammen nur eine Teillänge des Trägers, wodurch es an den Wendepunkten der Brennerbewegung zu Inhomogenitäten im $SiO_2$-Sootaufbau kommen kann.

Sowohl das Direktverglasen als auch das Sootverfahren führen letztlich zu einem dichten, transparenten, hochreinen, synthetischen Quarzglas.

Den genannten Herstellungsverfahren ist infolge des schichtweisen Abscheidens von $SiO_2$-Partikeln die Bildung von Schichtstrukturen inhärent. Diese können sich als so genannte Schlieren bemerkbar machen, die auf Brechzahl-Unterschiede zwischen benachbarten Schichten hinweisen. Dabei kann man grundsätzlich zwischen zylinderförmigen $SiO_2$-Rohlingen mit einer konzentrischen Schichtstruktur und solchen mit einer axialen Schichtstruktur unterscheiden. Beim OVD-Verfahren wird beispielsweise eine Schichtstruktur mit einer im Wesentlichen konzentrisch zur Rohling-Längsachse verlaufenden spiralförmigen Schicht erzeugt, indem auf der Zylindermantelfläche des um seine Längsachse rotierenden Trägers schichtweise $SiO_2$-Partikel abgeschieden werden. Demgegenüber ergibt sich beim VAD-Verfahren, bei dem auf einem scheibenförmigen, rotierenden Träger durch axiale Abscheidung ein $SiO_2$-Vollzylinder in Richtung der ZylinderLängsachse aufgebaut wird, in der Regel eine wendelförmige Schichtstruktur mit axial aufeinander folgenden Schichten, die sich senkrecht zur ZylinderLängsachse erstrecken.

An synthetisches Quarzglas für den Einsatz in der Mikrolithografie oder für optische Bauteile in der Nachrichtentechnik werden hohe Anforderungen an die Brechzahl-Homogenität gestellt. Daher sind zur Beseitigung von Schichten in Quarzglas-Zylindern mehrstufige Verformungsprozesse vorgeschlagen worden, wie beispielsweise in der DE 42 04 406 A1 und der EP 673 888 A1, die ein werkzeugfreies Verfahren zur Homogenisierung eines Schlieren behafteten Quarzglaskörpers durch mehrdimensionales Stauchen und Elongieren einer erweichten Quarzglasmasse beschreibt. Diese Methoden sind wirkungsvoll aber auch zeit- und kostenintensiv.

In der Vergangenheit hat sich als siliziumhaltiges Einsatzmaterial Siliziumtetrachlorid ($SiCl_4$) bewährt. $SiCl_4$

und andere chlorhaltige Substanzen zeigen bei moderaten Temperaturen unter 100 °C bereits hohe Dampfdrücke, so dass etwaige Verunreinigungen in der Flüssigphase verbleiben und die Herstellung von hochreinen Sootkörpern erleichtert wird. Andererseits entsteht bei der Umsetzung von $SiCl_4$ und anderen chlorhaltigen Einsatzmaterialien Salzsäure, die hohe Kosten bei der Abgaswäsche und Entsorgung verursacht.

Es wurde daher eine Vielzahl chlorfreier Einsatzmaterialien für die Quarzglasherstellung erprobt. Als Beispiel seien Monosilane, Alkoxysilane und Siloxane genannt. Eine besonders interessante Gruppe chlorfreier Einsatzmaterialien bilden die Polyalkylsiloxane (auch kurz als "Siloxane" bezeichnet), die beispielsweise aus der EP 463 045 A1 bekannt sind. Die Stoffgruppe der Siloxane lässt sich unterteilen in offenkettige und in geschlossenkettige Polyalkylsiloxane. Die Polyalkylsiloxane haben die allgemeine Summenformel $Si_pO_p(R)_{2P}$, wobei P eine ganze Zahl $\geq 2$ ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt. Wegen der großtechnischen Verfügbarkeit in hoher Reinheit wird derzeit Octamethylcyclotetrasiloxan (OMCTS) bevorzugt eingesetzt. Diese Substanz wird gemäß einer von General Electric Inc. eingeführten Notation auch als "D4" bezeichnet, wobei "D" die Gruppe $[(CH_3)_2Si]$-0- repräsentiert.

Für die Reindarstellung von D4 ist wegen der relativ hohen Siedetemperatur und der chemischen Ähnlichkeit zu anderen Polyalkylcyclosiloxanen wie Hexamethylcyclotrisiloxan (D3), Dekamethylcyclopentasiloxan (D5), Dodekamethylcyclohexasiloxan (D6) und Tetradekamethylcycloheptasiloxan (D7) jedoch eine zeit- und kostenaufwändige Destillationsprozedur erforderlich.

In der US 5,879,649 A geht es um eine derartige Reindarstellung von Polyalkylsiloxanen als Einsatzmaterial für die Quarzglasherstellung. Darin wird ein zweistufiger Destillationsprozess unter Einsatz eines Carbonfilters und eines Molekularsiebes vorgeschlagen, um den Anteil an Verunreinigungen mit Siedetemperaturen oberhalb von 250 °C auf einen Anteil von weniger als 14 Gew.-ppm, vorzugsweise auf weniger als 2 Gew.-ppm zu beschränken. Bei diesen hochsiedenden Verunreinigungen handelt es sich typischerweise um Komponenten mit einem mittleren Molekulargewicht von mehr als 500 g/mol. Es wird berichtet, dass Agglomerate derartiger Hochsieder zu Verstopfungen im Gasversorgungssystem führen und eine "Gelbildung" bewirken, die Defekte im Quarzglas erzeugen. Der Defektmechanismus scheint dabei die Abscheidung von unzersetzten oder nicht vollständig zersetzten Hochsieder-Agglomeraten zu sein, die sich anschließend unter Freisetzung von Gasen zersetzen und zu Blasen im Quarzglas führen können.

Die vorgeschlagene zweistufige Reinigungsmethode ist aufwändig und teuer und es hat sich gezeigt, dass auch bei optimierter Prozessführung Material-Inhomogenitäten, insbesondere in Form dünner Schichten mit erhöhter Dichte im Quarzglas vorkommen.

Alternativ dazu wird in der DE 103 02 914 A1 zur Herstellung von synthetischem Quarzglas mit günstigem Schädigungsverhalten gegenüber kurzwelliger UV-Strahlung vorgeschlagen, als Einsatzmaterial ein Gemisch aus $SiCl_4$ und einer mehrere Si-Atome enthaltenden, oligomeren Siliziumverbindung einzusetzen, wie beispielsweise einem Siloxan.

Das siliziumhaltige Einsatzmaterial kann dem Verbraucher, wie etwa einem Abscheidebrenner, in flüssiger Form zugeführt werden. In der Regel wird das flüssige Einsatzmaterial aber mittels eines Verdampfers in eine gasförmige oder dampfförmige Phase überführt und dem Verbraucher als kontinuierlicher Gasstromzugeführt.

Es ist eine große Anzahl von Verdampfern bekannt. Ein bekannter Verdampfer umfasst einen Behälter (einen so genannten "Bubbler"), in dem das flüssige Einsatzmaterial vorgehalten und mittels einer Heizeinrichtung auf eine Temperatur um die Verdampfungstemperatur erhitzt wird. Durch die erhitzte Flüssigkeit wird ein Trägergas geleitet, das dabei mit dem verdampfenden Einsatzmaterial beladen und unter Druck über ein Rohrleitungssystem der Reaktionszone zugeführt wird. Bei dem Trägergas handelt es sich beispielsweise um Sauerstoff. Eine derartige Medienversorgung eines Abscheidebrenners für die Herstellung von synthetischem Quarzglas durch Direktverglasen ist beispielsweise in der EP 908 418 A1 beschrieben.

Die Verdampfungsrate des Einsatzmaterials hängt im Wesentlichen von der Temperatur und von der Verweildauer des Trägergases in der flüssigen Phase ab. Beide Parameter werden durch die Höhe der Flüssigkeitssäule sowie von der Zufuhrrate und die Strömungsgeschwindigkeit des Trägergases beeinflusst. Beispielsweise hat die Größe der Trägergasblasen in der Flüssigkeitssäule Auswirkungen auf deren Steiggeschwindigkeit in der Flüssigkeit und damit auf die Beladung mit dem Einsatzmaterial und auf die Verdampfungsrate. Änderungen in der Flüssigkeitsmenge machen sich auch auf die Wärmeübertragung bemerkbar. Diese komplexen Wechselwirkungen lassen sich am einfachsten dadurch beherrschen, indem laufend flüssiges Einsatzmaterial nachgeliefert wird, so dass der Flüssigkeitspegel im Bubbler nicht sinkt.

Aber selbst bei konstantem Flüssigkeitspegel können sich in der flüssigen Phase unter Bildung eines "Sumpfes" Verunreinigungen mit relativ höherem Siedepunkt allmählich anreichern, so dass sich mit der Zeit die Zusammensetzung des am Abscheidebrenner ankommenden Einsatzmaterials ändert.

Eine zusätzliche Problematik ergibt sich bei Sootabscheideverfahren, bei denen mehrere Verbraucher gleichzeitig mit dem Einsatzmaterial gespeist werden müssen, wie etwa bei der Sootabscheidung mittels Mehrfachbrenner-Anordnung. Um eine unregelmäßige Sootabscheidung und Schichtenbildung zu vermeiden, ist es dabei besonders wichtig, dass jeder Abscheidebrenner quantitativ und qualitativ gleiche Sootaufbau-Charakteristiken hat. Schwankungen in der Gasversorgung der individuellen Abscheidebrenner lassen sich minimieren, indem diese aus einem gemeinsamen Vorratsbehälter über einen "Flussteiler" gespeist werden, wie dies beispielsweise in der DE 195 01 733 A1 beschrieben wird. Dies erfordert jedoch eine aufwändige Infrastruktur der Medienversorgung.

Die erwähnte "Sumpfbildung" vermeidet eine andere Form eines Verdampfers, wie er in der US 5,356,451 A1 beschrieben ist. Bei diesem Verdampfer ist innerhalb einer Verdampfungskammer ein Flüssigkeitsreservoir für das Einsatzmaterial vorgesehen, das sich entlang einer Längsseite der Kammer erstreckt und das kontinuierlich aufgefüllt wird. Überschreitet der Flüssigkeitspegel eine vorgegebene Überfließhöhe, fließt die Flüssigkeit über U-förmige Kanäle aus der längsseitigen Vorratskammer auf eine schiefe Ebene ab und bildet auf dieser einen dünnen Film. Die Kammer wird so beheizt, dass der flüssige Film auf der schiefen Ebene vollständig abgedampft ist, bevor das untere Ende der schiefen Ebene erreicht wird. Auf diese Weise wird gewährleistet, dass die gesamte Flüssigkeit einschließlich aller Verunreinigungen mit höherem Siedepunkt verdampft.

Eine Ausführungsform eines so genannten Vertikalverdampfers ist aus der DE 24 35 704 A1 bekannt. Dort wird vorgeschlagen, die zu verdampfende Flüssigkeit zu erwärmen, einem senkrecht stehenden rotationssymmetrischen Behälter zuzuführen und unter Bildung von Tröpfchen mit einem Durchmesser von weniger als 6 mm radial gegen die Behälterinnenwand zu sprühen und diese dort abzuscheiden. Die dampfförmigen Produkte werden nach oben abgezogen, während sich nicht verdampfte Flüssigkeit im unteren Teil des Behälters ansammelt, von wo sie kontinuierlich oder zeitweise entnommen werden kann.

Das bekannte Verfahren wirkt wie ein zusätzlicher Destillationsschritt beim Verdampfen, wobei schwer flüchtige Bestandteile über den Sumpf abgezogen werden können. Dadurch ergibt sich eine höhere Reinheit des verdampften Anteils des Einsatzmaterials. Ausbeute und Durchsätze sind aber vergleichsweise gering.

Technische Aufgabenstellung

Im Allgemeinen ist die Struktur eines $SiO_2$-Sootkörpers ausreichend gasdurchlässig, was eine gleichmäßige Gasphasenbehandlung oder Sinterung erleichtert. Im Bereich von Schichten mit höherer Dichte ist dies nur eingeschränkt möglich. Denn die Schichten stellen Diffusionsbarrieren dar, die bei Trocknungs- oder Sinterprozessen ein ungleichmäßiges Behandlungsergebnis verursachen können. Diese Problematik stellt sich wegen langer Diffusionswege insbesondere bei großvolumigen $SiO_2$-Sootkörpern. Schichtbereiche können insbesondere mit einem lokal erhöhten Gehalt an Hydroxylgruppen und gegebenenfalls an Chlor einhergehen.

Diese Material-Inhomogenitäten des Sootkörpers zeigen sich im daraus hergestellten Quarzglaskörper beispielsweise in Form axialer, radialer oder azimutaler Variationen der Hydroxylgruppen- oder Chlor-Konzentration oder der Viskositätswerte, und führen zu ungünstigen Eigenschaften im Endprodukt, wie beispielsweise einem ungünstigen Schädigungsverhalten gegenüber Bestrahlung mit energiereichem UV-Licht.

Der Erfindung liegt die Aufgabe zugrunde, ein Verfahren zur Herstellung von $SiO_2$-Sootkörpern mit hoher Materialhomogenität anzugeben, insbesondere von großvolumigen, zylinderförmigen Sootkörpern mit Außendurchmessern von mehr als 300 mm.

Allgemeine Beschreibung der Erfindung

Diese Aufgabe wird ausgehend von dem eingangs genannten Verfahren erfindungsgemäß dadurch gelöst, dass das flüssige Einsatzmaterial Zusatzkomponenten enthält, umfassend Hexamethylcyclotrisiloxan D3 und dessen lineares Homolog mit einem Gewichtsanteil mD3, Dodecamethylcyclohexasiloxan D6 und dessen lineares Homolog mit einem Gewichtsanteil mD6 und Tetradekamethylcycloheptasiloxan D7 und/oder Hexadecamethylcyclooctasiloxan D8 und deren lineare Homologe mit einem Gewichtsanteil m(D7 und/oder D8), wobei das Gewichtsverhältnis mD3/mD6 in einem Bereich zwischen 0,05 und 90 liegt und der Gewichtsanteil m(D7 und/oder D8) mindestens 20 Gew.-ppm beträgt.

Im Unterschied zu den bekannten Verfahren, bei denen ein Einsatzmaterial eingesetzt wird, das aus einer einzigen, möglichst reinen und definierten Siliziumverbindung besteht, wird erfindungsgemäß ein $SiO_2$-Einsatzmaterial vorgeschlagen, das als Gemisch unterschiedlicher Polyalkylsiloxane vorliegt. Octamethylcyclotetrasiloxan wird hier und im Folgenden kurz als D4 bezeichnet, und dementsprechend andere Polyalkylcyclosiloxane als D3, D5, D6, D7 und D8. D4 bildet die Hauptkomponente des Gemischs. Zusätzlich zu D4 sind chemisch ähnliche Polyalkylsiloxane im Gemisch enthalten, und zwar solche, mit geringerer Molekülmasse als D4 (darunter D3), als auch solche mit höherer Molekülmasse als D4 (darunter D6 und D7). Die unter dem Begriff "Zusatzkomponenten" zusammengefassten zusätzlichen Bestandteile des Einsatzmaterials haben somit Molekülmassen und Siedetemperaturen, die sich sowohl nach oben als auch nach unten von der relativen Molekülmasse von D4 (etwa 297 g/mol) und in der Siedetemperatur von D4 (etwa 175 °C) unterscheiden.

Das mit Zusatzkomponenten angereicherte, flüssige $SiO_2$-Einsatzmaterial wird einer Reaktionszone in gasförmiger Form zugeführt und dabei durch Oxidation und/oder Hydrolyse und/oder Pyrolyse zu $SiO_2$ zersetzt. Die Reaktionszone ist beispielsweise eine Brennerflamme oder ein Plasma. In der Reaktionszone wird das Polyalkylsiloxan-Molekül schrittweise zu $SiO_2$ oxidativ abgebaut, wobei ein $SiO_2$-Primärpartikel entsteht, an das weitere SiO- oder $SiO_2$-Moleküle aus der Gasphase angelagert werden. Der Anlagerungsprozess endet auf dem Weg durch die Reaktionszone in Richtung auf einer Ablagerungsfläche, sobald das agglomerierte oder aggregierte $SiO_2$-Partikel in eine Zone eintritt, in der keine weiteren unzersetzten Moleküle mehr zur Verfügung stehen.

Diese Spaltungs-, Oxidations- und Anlagerungsprozesse (im Folgenden auch unter dem Begriff "Partikelbildungsprozess" zusammen gefasst) verlaufen je nach Molekülmasse und Größe des Polyalkylsiloxan-Moleküls mit unterschiedlicher Kinetik und unterschiedlichen Temperaturen.

Beim erfindungsgemäßen Verfahren enthält das $SiO_2$-Einsatzmaterial sowohl mindestens eine Zusatzkomponente mit kleinerer relativer Molekülmasse als D4, als auch mindestens eine Zusatzkomponente mit größerer relativer Molekülmasse als D4. Es wird davon ausgegangen, dass bei der hydrolytischen oder pyrolytischen Zersetzung der Polyalkylsiloxane die Aktivierungsenergie des oxidativen Angriffs beziehungsweise die zur Spaltung notwendige thermische Energie mit steigender Molekülmasse zunimmt. Als Folge davon werden in der Reaktionszone Agglomerate und Aggregate unterschiedlicher Größe mit breiterer Partikelgrößenverteilung als bei monodispersem $SiO_2$-Einsatzmaterial gebildet.

Eine mögliche Erklärung für diese Verbreiterung der Partikelgrößenverteilung ist die, dass sich aufgrund der unterschiedlichen Gasphasenkinetik auch eine unterschiedliche Kinetik in Bezug auf die Bildung von $SiO_2$-Primärpartikeln ergibt, an denen weiteres Wachstum durch Anlagerung weiterer $SiO_2$-Moleküle aus der Gasphase stattfinden kann. Eine andere mögliche Erklärung ist, dass bereits die Anzahl und Konfiguration der Siliziumatome des jeweiligen Polyalkylsiloxan-Moleküls die Größe der $SiO_2$-Primärpartikel und damit einhergehend auch die Größe der daraus entstehenden $SiO_2$-Partikel und deren Konzentration in der Reaktionszone vorgibt.

In jedem Fall verändern die Zusatzkomponenten beim erfindungsgemäßen Verfahren im Vergleich zur Verwendung von reinem D4 den Partikelbildungsprozess in Richtung einer breiteren Streuung der Größen der sich bildenden $SiO_2$-Partikel, einhergehend mit einer Veränderung im Sootkörperaufbau.

Herstellungsbedingt haben Sootkörper eine gewisse Schichtstruktur, wobei die Schichten Bereiche lokaler Änderungen der Dichte oder der chemischen Zusammensetzung darstellen. Üblicherweise haben Sootkörper eine Dichte von 25 bis 32 % bezogen auf die Dichte von Quarzglas. Dabei zeigen diese Sootkörper eine relative Schwankung in der Dichte von 3 bis 4 %. Diese Dichteschwankungen setzen sich beim Verglasen des Sootkörpers in den Quarzglaskörper um, und führen dort zu radialen, azimutalen und axialen Variationen der Hydroxylgruppen oder Chlorkonzentrationen, die zu ungünstigen Eigenschaften des Quarzglaszylinders und der daraus produzierten Quarzglasfasern führen können.

Es hat sich gezeigt, dass bei Einsatz eines $SiO_2$-Einsatzmaterials gemäß der Erfindung ein $SiO_2$-Sootkörper mit überraschend hoher Homogenität, insbesondere mit gleichmäßiger und schwacher Ausprägung der Schichtstruktur erhalten wird.

Dieser Effekt kann darauf zurückgeführt werden, dass die Verbreiterung der Größenverteilung der gebildeten und sich ablagernden $SiO_2$-Partikel entweder zu einer homogeneren Ablagerung des $SiO_2$-Soots führt als bei monodispersen $SiO_2$-Partikeln, oder dass sie eine gleichmäßigere Verdichtung des $SiO_2$-Soots bei der Sootkörperherstellung oder bei der Verglasung erleichtert.

Damit dieser Effekt eintritt, müssen folgende Randbedingungen erfüllt sein:

(a) In dem in der Reaktionszone ankommenden Einsatzmaterial müssen Zusatzkomponenten mit Molekülmassen beiderseits der Referenzmolekülmasse von D4 vorhanden sind, idealerweise D3 und D6 und D7 beziehungsweise die entsprechenden offenkettigen Homologen.

Bei den Zusatzkomponenten D3 und D6 handelt es sich Moleküle mit ähnlicher Molekülmasse und chemischer Ähnlichkeit zu D4, so dass sich eine moderate Veränderung der Reaktionszone und des Partikelbildungsprozesses ergibt, einhergehend mit einer leichten Abflachung der Partikelgrößenverteilung.

(b) Eine möglichst gleichmäßige Verteilung der Zusatzkomponenten beiderseits von D4. Diese Bedingung ist dann hinreichend erfüllt, wenn das Verhältnis mD3/mD6 der Gewichtsanteile von D3 und D6 zwischen 0,05 und 90 liegt. Ein willkürlich gemischtes Polyalkylsiloxan-Gemisch mit Gewichtsanteile von D3 und D6 außerhalb dieses Bereichs führt zu schlechteren Ergebnissen hinsichtlich der Homogenität des Sootkörpers.

(c) Ein Mindestanteil eines noch höher als D6 siedenden Polyalkylsiloxans, idealerweise D7 oder das noch längerkettigere Polyalkylsiloxan D8, mit einem Gewichtsanteil m(D7 und/oder D8) von zusammen mindestens 20 Gew.-ppm (der Begriff mD7 wird im Folgenden zur Bezeichnung des Gewichtsanteils von D7 verwendet, und mit dem Begriff m(D7 und/oder D8) wird im Folgenden die Summe der Gewichtsanteile von D7 und D8 bezeichnet).

Der Siedepunkt von D7 bei Atmosphärendruck liegt bei etwa 276 °C und damit deutlich oberhalb des Siedepunkts von D4 (etwa 175 °C). Wegen des großen Unterschiedes in den jeweiligen Siedetemperaturen wirken sich bereits geringe Mengen der Zusatzkomponente D7 auf den Partikelbildungsprozess merklich aus. Bei Gewichtsanteilen m(D7 und/oder D8) von weniger als 20 ppm ist jedoch kein nennenswerter Effekt festzustellen. Beim Gewichtsanteil m(D7 und/oder D8) kann eine Menge an D7 durch eine entsprechende Menge an D8 ersetzt sein. Allerdings bewirkt D8 und deren lineares Homolog wegen ihrer großen Molekülmasse im Vergleich zu D4 bereits in geringer Konzentration eine merkliche Veränderung der Reaktionszone und des Partikelbildungsprozesses, so dass der Gewichtsanteil von D8 vorzugsweise nicht mehr als 20 Gew.-ppm des Einsatzmaterials beträgt.

Das erfindungsgemäße Verfahren zeichnet sich dadurch aus, dass die bekannten Dichteschwankungen im Sootkörper reduziert werden. Da sich diese Reduktion der Dichteschwankungen auf die Qualität des Quarzglases direkt auswirkt, werden reproduzierbar entsprechend hochwertigere, homogenere Quarzglaskörper erhalten, was den Materialausschuss reduziert.

Mittels des erfindungsgemäßen Verfahrens können $SiO_2$-Sootkörper und Quarzglaskörper erstellt werden, die eine besonders hohe Materialhomogenität aufweisen, welche den zurzeit gängigen Standard überschreitet. Die Vorzüge des Verfahrens können dadurch erklärt werden, dass eine auf mikroskopischer Skala stattfindende stärkere Variation der Größen der erstellten $SiO_2$ Partikel - die Verbreiterung der Partikelgrößenverteilung - in einer Verringerung der Schwankungsbreite der makroskopisch gemessenen Dichte innerhalb des $SiO_2$-Sootkörper resultiert.

Im Rahmen der Erfindung beschreibt der Begriff "Gewichtsanteil" eine relative Größe, die sich aus der Masse der jeweiligen Zusatzkomponente im Verhältnis zur Gesamtmasse des flüssigen $SiO_2$-Einsatzmaterials ergibt. Das Gewichtsverhältnis mD3/mD6 der beiden Gewichtsanteile der Zusatzkomponenten D3 und D6 ist somit eine dimensionslose Größe, die sich durch Division der beiden relativen Gewichtsanteile bestimmen lässt.

Im Rahmen der Erfindung umfasst der Begriff Polyalkylsiloxan sowohl lineare (umfassend auch verzweigte Strukturen) als auch zyklische Molekularstrukturen. Allerdings ist es bevorzugt, wenn die Polyalkylsiloxane des $SiO_2$-Einsatzmaterials mindestens drei Polymethylcyclosiloxane aufweisen, ausgewählt aus der Gruppe Hexamethylcyclotrisiloxan (D3), Octamethylcyclotetrasiloxan (D4), Dodecamethylcyclohexasiloxan (D6). Die Notation D3, D4, D6 entstammt einer von General Electric Inc. eingeführten Notation, bei der "D" die Gruppe $[(CH_3)_2Si]$-0- repräsentiert. Die Hauptkomponente ist D4 mit einem Anteil von mindestens 70 Gew.-%, insbesondere mindestens 80 Gew.-%, bevorzugt mindestens 90 Gew.-%, besonders bevorzugt mindestens 94 Gew.-% enthalten, jeweils bezogen auf das Gesamtgewicht des Einsatzmaterials.

Das flüssige Einsatzmaterial kann durch Mischen der Einzelkomponenten oder durch Verschnitt von Komponentenmischungen erzeugt werden, oder durch vorzeitige Entnahme aus einer Destillationskolonne oder vorzeitigen Abbruch einer Destillation, wie sie ansonsten zur Reinstdarstellung von Octamethylcyclotetrasiloxan üblich ist. Somit kann beim erfindungsgemäßen Verfahren auf eine Reinstdarstellung von Octamethylcyclotetrasiloxan verzichtet und stattdessen eine weniger reine und daher auch preiswertere D4-Qualität eingesetzt werden. Die ähnlichen Dichten der Polyalkylsiloxane des Einsatzmaterials wirken einer Entmischung entgegen.

Bei einer bevorzugten Ausgestaltung des Verfahrens liegt das Verhältnis mD3/mD6 im Bereich zwischen 0,1 und 40.

Es hat sich gezeigt, dass die Beifügung von D3 und D6 zu dem hauptsächlich aus D4 aufgebauten $SiO_2$-Einsatzmaterial in diesem vergleichsweise schmalen Bereich des Massenverhältnisses eine besonders signifikante Reduktion der Inhomogenitäten in der Dichte des Quarzglases ergibt.

In dem Zusammenhang hat es sich auch als günstig erwesen, wenn der Gewichtsanteil m(D7 und/oder D8) im Bereich zwischen 30 und 100 Gew.-ppm liegt.

Neben D6, D7 und D8 stellen Dekamethylcyclopentasiloxan D5 und dessen lineares Homolog Polyalkylsiloxane mit einem höheren Molekulargewicht als D4 dar. Die Wirkung von D5 in Bezug auf die Partikelgrößenverbreiterung beim Partikelbildungsprozess und die damit einhergehende Vergleichmäßigung beim $SiO_2$-Sooaufbaus ist jedoch geringer als die von D6 oder D7, sie trägt ergänzend dazu bei.

Damit die Zusatzkomponenten einen optimalen Effekt auf die Partikelgrößenverbreiterung beim Partikelbildungsprozess und die Vergleichmäßigung beim $SiO_2$-Sooaufbau erzeugen, ist eine Mindestmenge dieser Komponenten vorteilhaft. Daher hat es sich als günstig erwiesen, wenn die Summe der Gewichtsanteile mD3 + mD6 im Bereich zwischen 200 und 20.000 Gew.-ppm, bevorzugt zwischen 500 und 15.000 Gew.-ppm liegt.

Überraschenderweise hat es sich gezeigt, dass die Zusatzkomponenten D3 und D6 nicht das $SiO_2$-Einsatzmaterial dominieren müssen, sondern dass Beimi-schungen ausreichen, um ein $SiO_2$-Einsatzmaterial bereitzustellen, welches bei Abscheidung im $SiO_2$-Sootverfahren zu einer Verbreiterung der $SiO_2$-Partikelgröße und damit zu einer gesteigerten Homogenität des Sootkörpers führt. Bis zu einer Obergrenze von maximal 10 % des Gesamtgewichtes werden besonders gute Ergebnisse erzielt. Andererseits führen bereits geringe Mengen an Zusatzkomponenten D3 und D6 dazu, dass Dichteänderungen im Sootkörper durch unterschiedliche Partikelgrößen des $SiO_2$-Einsatzdampfes überdeckt werden, so dass insgesamt ein homogenerer Sootkörper beziehungsweise Quarzglaskörper erstellt wird. Bei Gewichtsanteilen von weniger als 0,5 Gew.-% der Zusatzkomponenten D3 und D6 macht sich der Effekt jedoch nicht mehr nennenswert bemerkbar.

Die zur Zersetzung nötige Aktivierungsenergie ist beim Polyalkylsiloxan D3 geringer als bei D4, was möglicherweise darauf zurückzuführen ist, dass sich der D3-Ring wegen höherer Ringspannung schneller und einfacher öffnen lässt als der stabilere D4-Ring. Es zeichnet sich außerdem ab, dass auch die Zersetzung der Polycyclosiloxane D6 und D5 eine höhere Aktivierungsenergie als D4 erfordert, um eine thermische Spaltung der betreffenden Ring-Moleküle auszulösen. Insgesamt zeigte sich aber, dass die Energiedifferenz zwischen D4 und D3 stärker ist als zwischen D4 und D6.

Deshalb und da D3 stärker zu Polymerisationsreaktionen neigt, hat es sich als vorteilhaft herausgestellt, wenn die Menge der Zusatzkomponenten D3 geringer ist als jene der Zusatzkomponente D6. So zeichnet sich eine vorteilhafte Ausführungsvariante des erfindungsgemäßen Verfahrens dadurch aus, dass mD3 im Bereich zwischen 200 Gew.-ppm und 15.000 Gew.-ppm liegt, und dass mD6 im Bereich zwischen 50 Gew.-ppm und 2.000 Gew.-ppm liegt.

Bei oben genannten Mengenanteilen der Zusatzkomponenten sind Dichteschwankungen innerhalb des Sootkörpers von weniger als 0,4 % erreichbar.

Beim Übergang des flüssigen Einsatzmaterials in die Gasphase kann sich die Zusammensetzung der Flüssigkeit durch Zersetzung, Polymerisation oder Destillation verändern. Dies geschieht insbesondere dann, wie bei den bekannten Verdampfungssystemen, wenn die zu verdampfende Flüssigkeit mit einer heißen Oberfläche in Kontakt gebracht wird. Heiße Oberflächen können bei organischem Einsatzmaterial zu unvorhersehbaren Veränderungen führen, wie beispielsweise Zersetzungen oder Polymerisationen. Daraus ergibt sich eine gewisse Variabilität und Unreproduzierbarkeit in der Prozessführung, die zu Fehlern im Partikelbildungsprozess und zu Inhomogenitäten im Sootaufbau führen können. Dies macht sich insbesondere dann bemerkbar, wenn es - wie hier - im Partikelbildungsprozess auf exakte Zusammensetzungen von Komponenten ankommt, die untereinander eine hohe chemische Ähnlichkeit haben. Zudem besteht bei bekannten Verdampfersystemen die Gefahr, dass feinste Flüssigkeitströpfchen mit dem abgeführten Dampfstrom mitgerissen werden, was ebenfalls zu Material-Inhomogenitäten im Sootkörper führen kann.

Um diese Effekte zu vermeiden oder möglichst gering zu halten, wird bevorzugt eine Verdampfungsmethode eingesetzt, bei der das Verdampfen die folgenden Schritte umfasst:

- Erhitzen des $SiO_2$-Einsatzmaterials,
- Einführen des erhitzten $SiO_2$-Einsatzmaterials in eine Expansionskammer, so dass zumindest ein erster Teil des $SiO_2$- Einsatzmaterials in Folge eines Druckabfalls verdampft,
- Vermischen des $SiO_2$-Einsatzmaterials mit einem erhitzten Verdünnungsmittel, so dass zumindest ein zweiter Teil des $SiO_2$-Einsatzmaterials in Folge einer Senkung des Taupunktes verdampft.

Bei dieser zweistufigen Verdampfung wird das flüssige $SiO_2$-Einsatzmaterials in der Expansionskammer in feine Tröpfchen zerstäubt, die ohne Kontakt mit festen, insbesondere metallischen Oberflächen vollständig verdampft werden. So gelingt es, die im flüssigen $SiO_2$-Einsatzmaterial bereitgestellte Zusammensetzung einschließlich Gewichtsverhältnisses mD3/mD6 und m(D7 und/oder D8) in den gasförmigen $SiO_2$-Einsatzdampf zu überführen. Daher ergibt sich eine Kongruenz der Anteile der Zusatzkomponenten im flüssigen $SiO_2$-Einsatzmaterial und im $SiO_2$-Einsatzdampf - im Folgenden auch kurz als "Einsatzdampf" bezeichnet.

Diese Verfahrensweise erfüllt somit zwei zentrale Forderungen. Zum einen wird das bereitgestellte flüssige $SiO_2$-Einsatzmaterial möglichst vollständig (das heißt zu mindestens 99 Gew.-%) in die Gasphase überführt. Zum anderen ist diese Verdampfung derart ausgestaltet, dass das $SiO_2$-Einsatzmaterial unter Beibehaltung der anteiligen Zusammensetzung der Komponenten verdampft. Insbesondere soll das Massenverhältnis der Zusatzkomponenten sowohl in der flüssigen als auch in der Gasphase im Wesentlichen übereinstimmen.

Im Rahmen der Erfindung bezieht sich die Aussage, dass die Verdampfung kongruent - unter Beibehaltung der Gewichtsverhältnisse - erfolgt, auf das Verhältnis mD3/mD6 in der flüssigen und festen Phase. Das Verhältnis

$$\tau = (G\_liquid - G\_vapor)/G\_liquid.$$

soll demnach maximal $\pm$ 500 ppm, bevorzugt maximal $\pm$ 100 ppm sein, wobei G_liquid das Gewichtsverhältnis mD3/mD6 im flüssigen $SiO_2$-Einsatzmaterial, und G_vapor das Gewichtsverhältnisses mD3/mD6 im gasförmigen $SiO_2$-Einsatzdampf ist.

Zur Verdampfung des Einsatzmaterials wird ein Verdünnungsmittel genutzt. Vorteilhafterweise handelt es sich bei dem Verdünnungsmittel um ein Trägergas, welches die Expansionskammer durchströmt. Aus diesem Grund wird im Folgenden der Begriff Verdünnungsgas und der Begriff Trägergas als gleichbedeutend verwendet. Durch das Hinzuführen des Verdünnungsmittels wird der Partialdruck des flüssigen $SiO_2$-Einsatzmaterials in der Expansionskammer vermindert und so dessen Taupunkt erniedrigt, so dass eine etwaige Vorab-Erhitzung des $SiO_2$-Einsatzmaterials niedrig ausfallen kann, um eine vollständige Umsetzung des $SiO_2$-Einsatzmaterials in den $SiO_2$-Einsatzdampf sicherzustellen.

Im Idealfall erfolgt eine vollständige Umsetzung des flüssigen Einsatzmaterials in die Gasphase. Ein Verdampfungsgrad von mindestens 99 Gew.-%, bevorzugt zu mindestens 99,9995 Gew.-%, des in den Verdampfungsprozess einlaufenden flüssigen $SiO_2$-Einsatzmaterials ist aber akzeptabel. Dies kann mittels dieses zweistufigen Verdampfungsverfahrens - also die Kombination der Verdampfung in Folge eines Druckabfalls und einer Senkung des Taupunktes - realisiert werden. Von dem als Flüssigkeit in den Verdampfer eingebrachten $SiO_2$-Einsatzmaterial verdampfen nur sehr geringe Anteile nicht, vorzugsweise weniger als 20 ppm, bevorzugt weniger als 10 ppm, besonders bevorzugt weniger als 5 ppm. In einzelnen Versuchen konnte der Anteil an nicht verdampftem $SiO_2$-Einsatzmaterial sogar auf weniger als 2,5 ppm reduziert werden.

Der "Taupunkt" ist hier als diejenige Temperatur definiert, bei der sich ein Gleichgewichtszustand von kondensierender und verdunstender Flüssigkeit einstellt.

Bei einer vorteilhaften Ausgestaltung dieser Verfahrensweise ist vorgesehen, dass das Einführen des erhitzten $SiO_2$-Einsatzmaterials in die Expansionskammer eine Injektionsphase umfasst, in der das $SiO_2$-Einsatzmaterial in flüssiger Form in feine Tröpfchen zerstäubt wird, wobei die Tröpfchen einem mittleren Durchmesser von weniger als 5 $\mu$m, vorzugsweise weniger als 2 $\mu$m, aufweisen.

Das flüssige Einsatzmaterial wird umgesetzt in eine Wolke von kleinen Tröpfchen, die durch die Expansion als Folge des Druckabfalles gleichmäßig verdampfen können. Die feinen Tröpfchen stellen eine große Oberfläche bereit, die ein schnelles und effizientes und insbesondere ein vollständiges Verdampfen des flüssigen Einsatzmaterials ermöglicht, bevor es zu Kontakt mit heißen Oberflächen des Verdampfers kommt. Auf diese Weise werden Veränderungen der Zusammensetzung durch Zersetzung, Polymerisation oder Destillation weitgehend vermieden, so dass eine definierte Zusammensetzung des dem Verbraucher zugeführten Einsatzmaterials und ein reproduzierbarer Partikelbildungsprozess gewährleistet werden.

Die erfindungsgemäße Kombination von Bereitstellung einer auf die homogene Sootbildung optimierten Zusammensetzung des Einsatzmaterials einerseits und deren Aufrechterhaltung beim Verdampfen und der Zufuhr zur Reaktionszone andererseits führt zu einem Sootkörper, aus dem durch Sintern oder Verglasen ein Quarzglas erhalten wird, das sich durch hohe Materialhomogenität und Strahlenbeständigkeit auszeichnet.

Um die Aufteilung der Flüssigkeit in kleine Tröpfchen zu unterstützen, sind grundsätzlich Ultraschallzerstäuber geeignet, bei denen durch die Einwirkung von Ultraschall eine gleichmäßige und feine Zerstäubung des $SiO_2$-Einsatzmaterials herbeigeführt wird. Im Rahmen der Erfindung bezeichnet Ultraschall einen Schall mit Frequenzen zwischen 16 kHz und 1,6 GHz. Bei einem Ultraschallzerstäuber wird die Flüssigkeit ohne Druckapplikation und ohne Erhitzung zerstäubt. So kann beispielsweise eine mit der Flüssigkeit benetzte Piezokeramik mittels einer hochfrequenten Wechselspannung in Schwingungen versetzt werden. In Folge dessen bilden sich in der Flüssigkeit Ultraschallwellen aus, deren Maximalstärke auf einer bestimmten Flüssigkeitshöhe erreicht wird und die das Entstehen eines sogenannten Ultraschallrüssels bewirken. Aus diesem Ultraschallrüssel lösen sich kleine Flüssigkeitströpfchen oder Aerosole, die für die gewünschte Anwendung benutzt werden können. Der Vorteil von Ultraschallzerstäubern besteht in der gleichmäßigen Zerstäubung veränderlicher Volumenströme, dem nahezu konstanten Tropfenspektrum über den gesamten Volumenstrombereich und der geringen Eigengeschwindigkeit der Tropfen, woraus sich eine gute Beeinflussbarkeit des Strahls ergibt. So kann durch Ultraschallzerstäuben reproduzierbar eine enge Tröpfchengrößenverteilung erzeugt werden, was sich auf die Gleichmäßigkeit des Verdampfungsergebnisses positiv auswirkt.

Alternativ dazu findet die Umsetzung des flüssigen Einsatzmaterials in die Dampfphase ausschließlich durch die Nutzung des Trägergases statt, mit der Folge der Senkung des Partialdrucks. Dabei müssen entsprechend ausreichende Mengen des Verdünnungsmittels/Trägergases durch die Expansionskammer hindurch strömen und so für die Verdampfung des flüssigen $SiO_2$-Einsatzmaterials sorgen.

Als dritte und besonders bevorzugte Alternative erfolgt die Verdampfung des flüssigen Einsatzmaterials sowohl durch die Nutzung des Druckabfalls als auch durch die Senkung des Partialdrucks. Diese Variante hat sich als besonders vorteilhaft erwiesen, wenn zur Erstellung von großvolumigen Quarzglaszylindern (beispielsweise mit Durchmessern von mehr als 250 mm) große Mengen an flüssigem Einsatzmaterial verdampft werden müssen. Um die benötigten großen Einsatzmaterialmengen schonend und gleichmäßig von der flüssigen Phase in die Gasphase umzusetzen, hat es sich als vorteilhaft erwiesen, wenn ein zumindest für Teilkomponenten überhitztes $SiO_2$-Einsatzmaterial in die Expansionskammer eingeführt wird und dort durch Druckabfall und mittels der Nutzung eines Verdünnungsmittels in die Gasphase überführt wird. Diese Kombination der Verdampfung in Folge eines Druckabfalls und einer Senkung des Taupunktes ermöglicht es, dass von dem flüssig in den Verdampfer eingebrachten $SiO_2$-Einsatzmaterial nur sehr geringe Anteile nicht verdampfen.

Das flüssige $SiO_2$-Einsatzmaterial lässt sich leichter und gleichmäßiger in die Gasphase überführen, wenn die einzelnen zu verdampfenden Mengen jeweils gering sind und eine große Oberfläche aufweisen. Dieses lässt sich am besten dadurch erzielen, dass die Flüssigkeit des $SiO_2$-Einsatzmaterials in feine Tröpfchen zerstäubt wird. Je feiner die Tröpfchen sind, umso effizienter, vollständiger und schneller erfolgt das Verdampfen. Die zerstäubten Tröpfchen können dann über den Druckabfall und/oder die Vermischung mit dem erhitzten Verdünnungsmittel/Trägergas in die Gasphase überführt werden.

Es hat sich als günstig erwiesen, wenn der Kontakt der feinen Tröpfchen mit dem heißen Trägergas in einer Kammer erfolgt, die auf einer Temperatur im Bereich von 150°C bis 230°C gehalten wird. Bei einer Temperatur von weniger als 150 °C besteht eine gewisse Gefahr, dass Tröpfchen nicht vollständig verdampfen, so dass Flüssigkeit in die Reaktionszone eingeschleppt wird, was zu Inhomogenitäten im Partikelbildungsprozess und zu Fehlern im Sootkörperaufbau führt, wie etwa Blasen. Bei Temperatur oberhalb von 230°C steigt die Tendenz, dass ansonsten energetisch gehemmte Reaktionen mit unreproduzierbaren und unerwünschten Reaktionsprodukten, insbesondere von Zersetzungen und Polymerisationsreaktionen.

Das Größenspektrum der Tröpfchen hängen von einer Vielzahl an Einflussgrößen ab. Neben den rheologischen Eigenschaften der Flüssigkeit und der Geometrie der Zerstäubungsdüse ist dies insbesondere die Austrittsgeschwindigkeit der Flüssigkeit aus der Zerstäubungsdüse, die im Wesentlichen von der Druckdifferenz bestimmt wird. Innerhalb eines Druckdifferenzbereichs von 1,2 bis 1,8 bar zerfällt der austretende Flüssigkeitsstrahl aufgrund turbulenter Strömung zu feinen Tropfen mit besonders enger Tropfengrößenverteilung.

Vorzugsweise wird ein Trägergas eingesetzt, das Stickstoff, Argon oder Helium enthält.

Hierbei handelt es sich um Gase, die sich in Bezug auf Polyalkylsiloxane inert verhalten, so dass Oxidations-, Polymerisations- oder Zersetzungsreaktionen zwischen der Flüssigkeit und dem Trägergas, insbesondere unter Druck und höherer Temperatur, und damit eine nicht reproduzierbare Veränderung der Zusammensetzung des Einsatzmaterials vermieden werden.

Eine weitere Ausführungsvariante des erfindungsgemäßen Verfahrens zeichnet sich dadurch aus, dass beim Einführen des $SiO_2$-Einsatzmaterials in die Expansionskammer eine Zusammensetzung des $SiO_2$-Einsatzmaterials mittels eines Konzentrationsdetektors gemessen wird.

Im Rahmen dieser Ausgestaltung wird die Zusammensetzung, also beispielsweise das Verhältnis D3, D6 und D7 im Rahmen einer Überwachung direkt bei der Expansionskammer durchgeführt. Das zugeführte $SiO_2$-Einsatzmaterial wird dabei mittels des Konzentrationsdetektors, wie etwa eines Gaschromatographens, analysiert. Eine derartige Analyseeinrichtung mit einem Konzentrationsdetektor kann auch am Ausgang der Expansionskammer angeordnet sein und die Zusammensetzung des $SiO_2$-Einsatzdampfes ermitteln. Einer oder beide Detektoren können Teil eines Qualitätsmanagementsystems sein und die gemessene Zusammensetzung an ein Rechnersystem übermitteln, wo die Qualität der zugefügten Materialien und Dämpfe überwacht wird. Diese permanente Überwachung der Zusammensetzung und Gewichtsanteile des $SiO_2$-Einsatzdampfes stellt sicher, dass das erfindungsgemäße Verfahren jederzeit angewandt wird und so Sootkörper aufgebaut werden können, deren Varianz der Dichteschwankungen nur$\Box\delta_{Inv}$ = 0,023 % betragen. Aus solcher Art aufgebauter Sootkörper können dann durch Verglasung extrem homogene synthetische Quarzgläser hergestellt werden.

Das flüssige Einsatzmaterial wird kann durch Mischen der Einzelkomponenten D3, D4, D5, D6 und D7 oder durch Verschnitt von Komponentenmischungen erzeugt werden. Vorzugsweise umfasst das Bereitstellen eines flüssigen $SiO_2$-Einsatzmaterials gemäß Verfahrensschritt (a):

- ein Bereitstellen einer ersten Mischung von Polyalkylsiloxanen, in der D3, D4, D5, D6 und deren lineare Homologen mindestens 99 Gew.-% stellen,
- ein Bereitstellen einer zweiten Mischung von Polyalkylsiloxanen, in der D7 einen Anteil von mindestens 5.000 Gew.-ppm, vorzugsweise mindestens 10.000 Gew.-ppm, besonders bevorzugt mindestens 20.000 Gew.-ppm, stellt.
- Herstellen eines Verschnitts aus erster und zweiter Mischung von Polyalkylsiloxanen vor dem oder beim Verdampfen gemäß Verfahrensschritt (b) in einem Mischungsverhältnis, das zu einem Gewichtsanteil für m(D7 und/oder D8) von mindestens 20 Gew.-ppm in der Gesamtmischung führt.

Eine Polyalkylsiloxanmischung im Sinne der ersten Mischung, basierend auf D4 und mit D3 und D6 im Verhältnis und in der Menge wie angestrebt, kann beispielsweise erhalten werden, indem ein üblicher Destillationsprozess zur Reinstdarstellung von D4 eingesetzt wird. Dieser Destillationsprozess kann bis zur Reinstdarstellung von D4 getrieben werden, was aber- auch aus Kostengründen - nicht erforderlich ist, da gegebenenfalls der Mischung Zusatzkomponenten entzogen sind, die mittels der zweiten Mischung wieder zugesetzt werden müssen. In der Gesamtmischung stellt die erste Mischung den größten Anteil dar, beispielsweise mehr als 95 Gew.-%. Der Mengenanteil m(D7 und/oder D8) ist in derartigen Mischungen in der Regel jedoch zu gering.

Die zweite Mischung dient in erster Linie zur Einstellung der vorgegebenen Menge an D7 (und/oder D8) und zur etwaigen Korrektur des Verhältnisse mD3/mD6. Polyalkylsiloxanmischungen mit einem hohen Anteil an D7 und längerkettigen Molekülen liegen beispielsweise in einer Zwischenfraktion vor, die bei einer mehrstufigen konventionellen fraktionierenden Destillationsapparatur vor der letzten Destillationsstufe abgezogen werden kann. Der Gewichtsanteil m(D7 und/oder artigen Zwischenfraktionen beträgt vorzugsweise mindestens 5000 Gew.-ppm. Die erforderliche Verschnittmenge der zweiten Mischung hängt im Wesentlichen vom mD7+-Gewichtsanteil ab und ist gering im Vergleich zur Verschnittmenge der ersten Mischung. Auf eine teuere Reinstdarstellung von D4 beziehungsweise auf den Einsatz von hochreinem D4 kann in jedem Fall verzichtet werden.

Das Verschneiden von erster und zweiter Mischung erfolgt in der flüssigen Phase des Einsatzmaterials. Alternativ dazu erfolgt zunächst das Verdampfen von erster und zweiter Mischung und das Vermischen durch Zusammenführen der Dampfströme vor oder während Verfahrensschritt (c). Durch den Einsatz separater Verdampfer für unterschiedliche Komponenten des Einsatzmaterials können die Verdampfungsparameter, wie Verdampfungstemperatur und Verdampfungsrate, individuell an die zu verdampfenden Komponenten angepasst und optimiert werden.

Bei einer bevorzugten Verfahrensvariante ist vorgesehen, dass das Abscheiden der $SiO_2$-Partikel auf der Ablagerungsfläche gemäß Verfahrensschritt (b) erfolgt, indem der Einsatzmaterialdampf einer Vielzahl in einer Brennerreihe angeordneter Abscheidebrenner zugeführt wird, die gemeinsam reversierend entlang der Ablagerungsfläche bewegt werden.

Bei dieser bekannten Art und Weise der Herstellung von $SiO_2$-Sootkörperns werden die Abscheidebrenner entlang einer Teilstrecke der Sootkörper-Oberfläche hin- und herbewegt. Wegen Unterschieden in der Geometrie der einzelnen Abscheidebrenner oder in der Medienzuführung zu den Brennern ist diese Verfahrensweise besonders anfällig für Dichteschwankungen im Sootkörper, insbesondere auch im Überlappungsbereich benachbarter Abscheidebrenner. Es hat sich gezeigt, dass eine Verbesserung der Sootdichtenhomogenität erzielt wird, insbesondere im Bereich der Wendepunkte der Brennerbewegung, was auf die Eigenart des erfindungsgemäßen Verfahrens zurückgeführt werden kann, Sootdichtenunterschiede aufgrund der Verbreiterung der Partikelgrößenverteilung beim Partikelbildungsprozess eher zu verwischen als zuzulassen.

Das erfindungsgemäße Verfahren eignet sich daher besonders gut zu Herstellung von synthetischem Quarzglas, das zur Produktion von optischen Fasern eingesetzt wird. Geringe Dichteschwankungen des Sootkörpers erleichtern die Herstellung von qualitativ hochwertigem Quarzglas, das für optische Fasern für die Telekommunikation besonders geeignet ist.

Ausführungsbeispiel

Nachfolgend wird die Erfindung anhand von Ausführungsbeispielen und einer Zeichnung näher erläutert. Es zeigt:

**Figur 1** eine Vorrichtung zur Durchführung des erfindungsgemäßen Verfahrens zur Herstellung eines $SiO_2$-Sootkörpers in schematischer Darstellung,

**Figur 2** ein Diagramm zur Schichtdichte in Sootkörpern Abhängigkeit von der Zusammensetzung des Einsatzmaterials,

**Figur 3** eine computertomographische Aufnahme eines erfindungsgemäß unter Einsatz eines Einsatzmaterials aus unterschiedlichen Polyalkylsiloxanen hergestellten Sootrohres in einer Ansicht in Richtung der Sootrohr-Längsachse,

**Figur 4** zum Vergleich, eine computertomographische Aufnahme eines anhand des Standes der Technik unter Einsatz eines reinen Octamethylcyclotetrasiloxans als Einsatzmaterial hergestellten $SiO_2$-Sootrohres,

**Figur 5** ein schematisches Diagramm der verschiedenen Elemente des erfindungsgemäßen Quarzglasherstellungssystems,

**Figur 6** eine schematische Darstellung einer Verdampfungskammer,

**Figur 7** eine Konstitutionsformel des Moleküls D3, und

**Figur 8** eine Konstitutionsformel des Moleküls D7.

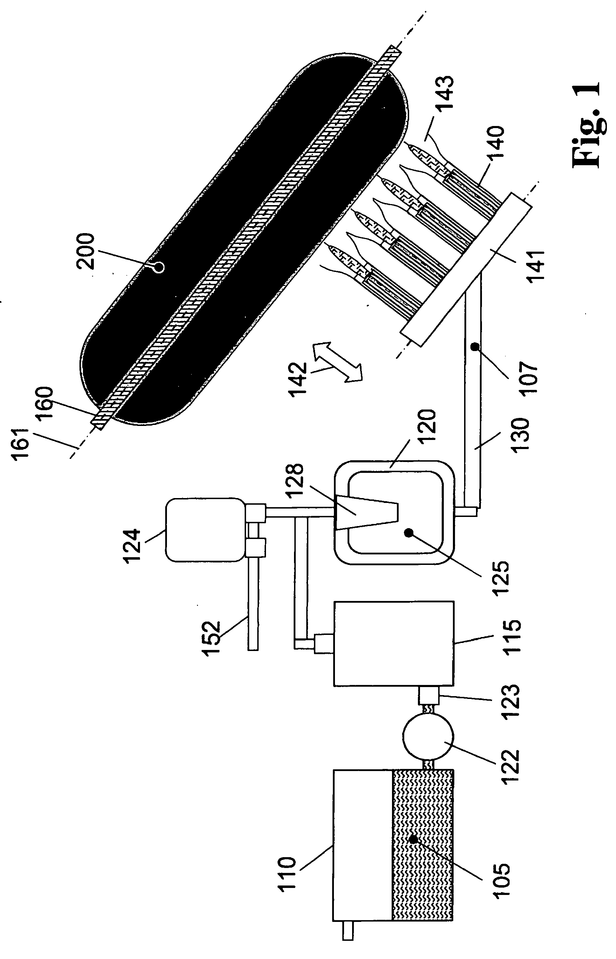

Die in **Figur 1** dargestellte Vorrichtung dient zur Herstellung eines $SiO_2$-Sootkörpers 200. Entlang eines Trägerrohres 160 aus Aluminiumoxid ist eine Vielzahl in einer Reihe angeordneter Flammhydrolysebrenner 140 angeordnet, die zur Soot-Abscheidung in einer gemeinsamen Brennerreihe entlang des rotierenden Trägerrohres 160 reversierend hin- und herbewegt werden, wobei jede der Brennerflammen 143 nur eine Teillänge des Trägerrohres 160 überstreicht. Die Flammhydrolysebrenner 140 sind auf einem gemeinsamen Brennerblock 141 montiert, der parallel zur Längsachse 161 des Trägerrohrs 160 zwischen zwei, in Bezug auf die Längsachse 161 ortsfesten Wendepunkten hin- und herbewegt wird und der senkrecht dazu verschiebbar ist, wie dies die Richtungspfeile 142 andeuten. Die Brenner 140 bestehen aus Quarzglas; ihr Mittenabstand zueinander beträgt 15 cm.

Die den Flammhydrolysebrennern 140 jeweils zugeordnete Brennerflamme 143 stellt eine Reaktionszone im Sinne der Erfindung dar. Den Flammhydrolysebrennern 140 werden jeweils als Brennergase Sauerstoff und Wasserstoff zugeführt sowie als Einsatzmaterial für die Bildung der $SiO_2$-Partikel ein $SiO_2$-Einsatzdampf 107 zugeführt, der ein Gemisch aus verdampften Polyalkylsiloxanen mit der aus Tabelle 1 ersichtlichen Zusammensetzung enthält. Das mit Zusatzkomponenten angereicherte, flüssige $SiO_2$-Einsatzmaterial 105 wird verdampft und der Reaktionszone in gasförmiger Form zugeführt und darin durch Oxidation und/oder Hydrolyse und/oder Pyrolyse zu $SiO_2$-Partikeln zersetzt.

Die $SiO_2$-Partikel selbst liegen in Form von Agglomeraten oder Aggregaten von $SiO_2$-Primärpartikeln mit Partikelgrößen im Nanometerbereich vor. Die $SiO_2$-Partikel werden auf der Zylindermantelfläche des um seine Längsachse 161 rotierenden Trägerrohrs 160 abgeschieden, so dass schichtweise der Sootkörper 200 mit einem Außendurchmesser von 350 mm aufgebaut wird. Während des Abscheideprozesses stellt sich auf der Sootkörperoberfläche eine Temperatur von etwa 1200°C ein.

Die Herstellung des $SiO_2$-Einsatzdampfes 107 mit dem Polyalkylsiloxan-Gemisch erfolgt mittels eines Verdampfersystems 120, das einen Vorratsbehälter 110 für das flüssige Gemisch, eine Flüssigkeitspumpe 122, ein Durchflussmessgerät 123 für Flüssigkeit, einen MFC (mass flow controller) 124 für die geregelte Zufuhr eines Stickstoff-Trägergasstroms 152 und eine doppelwandige, beheizbare Verdampfungskammer 125 mit einem Zerstäuber 128 umfasst. Der Vorratsbehälter 110, eine Pumpe 122 und ein Zerstäuber 128 sind mittels flexibler metallischer Leitungen miteinander verbunden. Der Vorratsbehälter 110 wird auf eine Temperatur von 170°C erhitzt, und die erhitzte Flüssigkeit mittels der Pumpe 122 über das Durchflussmessgerät 123 in exakter Dosierung dem Zerstäuber 128 zugeführt. Dabei kann in der Verbindungsleitung zwischen Durchflussmessgerät 123 und Zerstäuber 128 ein Konzentrationsdetektor zur Überwachung der Zusammensetzung des $SiO_2$-Einsatzmaterials 105 und/oder des $SiO_2$-Einsatzdampfes 107 vorgesehen sein.

Bei dem Zerstäuber 128 - auch als Zerstäuberdüse bezeichnet - handelt es sich um einen Ultraschallzerstäuber. Diesem werden gleichzeitig ein Stickstoff-Trägergasstrom über den MFC 124 mit einem Druck von 1,5 bar bis 5 bar und die zu verdampfende Flüssigkeit zugeführt. Diese wird in feine Tröpfchen mit einem maximalen Durchmesser von 1 $\mu$m und schmaler Tröpfchengrößenverteilung mit einem mittleren Durchmesser ($d_{50}$-Wert) von 0,7 $\mu$m zerstäubt und dabei unmittelbar in die Verdampfungskammer 125 eingesprüht.

Die Verdampfungskammer 125 hat eine Innentemperatur von 195°C, so dass die feinen Flüssigkeitstöpfchen unmittelbar verdampfen und der Dampfstrom einem ortsfesten Flussteiler zugeführt und von diesem über wärmeisolierte flexible Medienzufuhrleitungen auf die einzelnen Abscheidebrenner 140 aufgeteilt wird. In den Flussteiler münden auch eine Zufuhrleitung für die Brenngase Sauerstoff und Wasserstoff sowie eines Hilfsgases (Sauerstoff), das in der Brennerflamme 143 zwischen dem Strom des Einsatzmaterials und dem Strom des Brenngases eingesetzt wird, und das einer frühzeitigen Durchmischung entgegenwirkt. Die Mischung von Brenngasen und dem $SiO_2$-Einsatzdampf 107 erfolgt somit erst in der heißen Zone der Brennerflamme 143.

Nach Abschluss des Abscheideprozesses wird ein Rohr aus porösem $SiO_2$-Soot (Sootrohr) erhalten, das einer computertomographischen Untersuchung (CT-Untersuchung) unterzogen wird. Dabei wird das Sootrohr 200 über seine Länge mit Röntgenstrahlen durchstrahlt. Die so gewonnenen Aufnahmen lassen quantitative und qualitative Aussagen über die Intensität und die Homogenität der axialen und radialen Schichtstruktur des Sootrohres 200 zu.

**Tabelle 1**

| Nr. | mD3 | mD6 | m(D7 und/oder D8) | mD3 + mD6 | mD3/mD6 | mD3/m(D7 und/oder D8) | "S" |
|---|---|---|---|---|---|---|---|
| **1** | 4000 | 100 | 25 | 4.100 | 40 | 160 | **++** |
| **2** | 500 | 4.500 | 20 | 5.000 | 0,1 | 25 | **0** |
| **3** | 13.000 | 3.000 | 50 | 16.000 | 4,3 | 260 | **++** |
| **4** | 200 | 300 | 80 | 500 | 0,7 | 3 | **+** |
| **5** | 43.000 | 500 | 110 | 43.500 | 86,0 | 391 | **0** |
| **6** | 32.000 | 250 | 120 | 32.250 | 128 | 267 | **-** |
| **7** | 37.000 | 70 | 180 | 37.070 | 529 | 206 | **-** |
| **8** | 56.000 | 130 | 120 | 56.130 | 430 | 467 | **-** |
| **9** | 41.000 | 300 | 430 | 41.300 | 136 | 95 | |
| **10** | 90.000 | 100 | 240 | 90.100 | 900 | 375 | **--** |
| **11** | 43.000 | 500 | 15 | 43.500 | 86,0 | 2866 | **--** |

(fortgesetzt)

| Nr. | mD3 | mD6 | m(D7 und/oder D8) | mD3 + mD6 | mD3/mD6 | mD3/m(D7 und/oder D8) | "S" |
|---|---|---|---|---|---|---|---|
| 12 | 13.000 | 3.000 | 15 | 16.000 | 4,3 | 867 | - |
| 13 | 200 | 4500 | 25 | 4700 | 0,04 | 8 | - |

Alle Konzentrationsangaben der Polyalkylsiloxane in Tabelle 1 sind in Gew.-ppm, wobei der restliche Anteil jeweils aus D4 und dem chemisch ähnlichen D5 sowie aus unvermeidlichen Verunreinigungen besteht.

Die Größe "S" ist ein qualitatives Maß für die Homogenität und die Intensität der anhand der CT-Messung erfassten Schichtstruktur. Dabei setzt sich die Symbolik der qualitativen Bewertung wie folgt um:

- "++" sehr gut,
- "+" gut,
- "0" akzeptabel,
- "-" schlecht und
- "--" sehr schlecht.

In Tabelle 1 sind unterschiedlichen Zusammensetzungen des flüssigen $SiO_2$-Einsatzmaterials aufgelistet, die experimentell untersucht wurden sowie die Qualitätsergebnisse, die an dem jeweiligen Sootrohr ermittelt wurden.

Das flüssige $SiO_2$-Einsatzmaterial wurde aus Polyalkylsiloxanmischungen erzeugt. Die erste Ausgasungsmischung ist handelsübliches hochreines D4, das im Wesentlichen nur noch Anteile an D3 und D5, aber kaum D6 und kein D7 und kein D8 enthält.

Bei der zweiten Ausgangsmischung handelt es sich ebenfalls um handelsübliches D4, jedoch in mit geringerer Reinheit. Diese Ausgasungsmischung enthält im Wesentlichen D3, D4, D5 und geringe Mengen an D6 und D7. Diese Mischung stellt die Hauptmenge im Einsatzmaterial.

Die dritte Polyalkylsiloxanmischung ist ebenfalls ein Destillat von Polyalkylsiloxanen. Die Ausgangsflüssigkeit ist hier eine Zwischenfraktion, die bei der mehrstufigen konventionellen fraktionierenden Destillation vor der letzten Destillationsstufe abgezogen wird. Diese Polyalkylsiloxanmischung besteht hauptsächlich aus D5: (50 bis 85 Gew.-%), D6: (10 bis 40 Gew.-%) und D7: (0,5 bis 5 Gew.-%).

Die Ausgangsmischungen werden in der flüssigen Phase unter Bildung einer Gesamtmischung mit einem Mischungsverhältnis vermischt, so dass ein Einsatzmaterial mit den angestrebten Anteilen an Zusatzkomponenten entsteht. Der Anteil der dritten Ausgangsmischung an der Gesamtmischung liegt zwischen 0,1 und 3 Gew.-%.

Wie deutlich zu erkennen sind, führen Beimischungen von D3 und D6 mit einem Gewichtsverhältnis mD3/mD6 in einem Bereich zwischen 0,01 und 100, insbesondere zwischen 0,10 und 10zu homogenen Sootkörpern sofern gleichzeitig der Gewichtsanteil von D7 mindestens 20 ppm beträgt. Ein Über- oder Unterschreiten dieser Gewichtsverhältnisse führt dazu, dass die Anzahl der Inhomogenitäten steigt und damit die Qualität des synthetischen Quarzglases sinkt. So zeigen die qualitativen Ergebnisse von Tabelle 1, dass bei Verwendung eines Einsatzmaterials in Form einer Mischung, die neben D4 einen geeigneten Mengenanteil an den Polyalkylcyclosiloxanen D3, D6 und D7 enthält, ein Quarzglas auf wirtschaftliche Art und Weise erhalten wird, das eine gleichmäßige Schichtstruktur mit geringer Schichtausprägung aufweist.

Darüber hinaus zeigt sich, dass die Summe der Gewichtsanteile der Komponenten mD3 und mD6 bevorzugt in einem Bereich zwischen 200 und 20.000 Gew.-ppm liegen und der Gewichtsanteil m(D7 und/oder D8) mindestens 20 ppm, vorzugsweise mindestens 50 Gew.-ppm betragen sollten, um eine optimale Homogenität der Quarzglaskörper zu erzielen. Abweichungen von dem ausgewählten Bereich und/oder der ausgewählten Summe der Gewichtsanteile führen jeweils zu einer Reduktion der Homogenität des Quarzglases. Besonders herausgehoben waren die Proben, deren mD3/mD6 Verhältnis zwischen 0,1 und 40 und deren D7-Anteil 20 Gew.-ppm beziehungsweise 25 Gew.-ppm betrugen.

Die nach dem Stand der Technik und/oder dem erfindungsgemäßen Verfahren hergestellten Sootkörper können eine Dichte aufweisen, die zwischen 25 bis 32 % der Dichte von Quarzglas beträgt. Die erzielte Dichte ist unter anderem abhängig von dem Abstand der Brenner zu der Ablagerungsfläche, der eingestellten Temperatur, der Stöchiometrie der Gase sowie der Geometrie der Abscheidebrenner. Durch Variation dieser Faktoren können unterschiedliche Dichteverläufe innerhalb des Sootkörpers resultieren, wie etwa lineare, ansteigende oder abfallende radiale Dichteverläufe in Sootkörpern. Zur Untersuchung der Dichteverteilungen wurde die lokale Dichte eines Sootkörpers mit bekannten Verfahren an ca. 700 Messpunkten ermittelt. Dazu werden mittels computertomografischer Verfahren über die Länge des Sootkörpers etwa 50 Schnittaufnahmen erstellt, die jeweils einen Schnitt quer zur Längsachse des Sootkörpers zeigen. Zur Bestimmung des radialen Dichteverlaufes werden in jedem der 50 computertomografischen Schnitte jeweils 14, etwa äquidistante Messpunkte aufgenommen. Mittels dieses Verfahrens kann der jeweils radiale Dichteverlauf entlang einer Schnittfläche durch den Sootkörper und auch ein Dichteprofil entlang der Längsachse des Sootkörpers bestimmt werden.

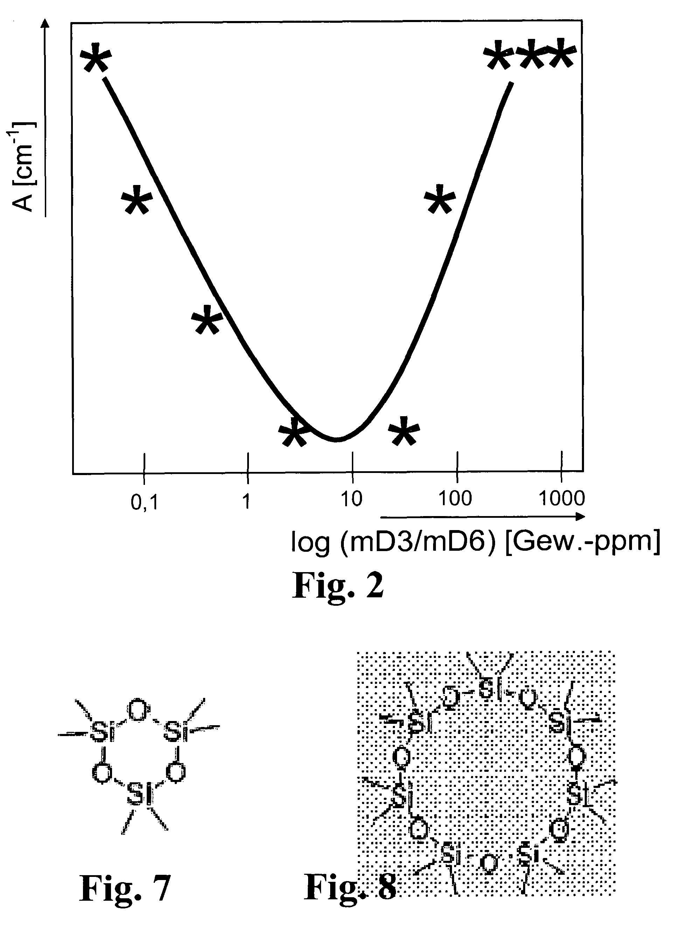

Wie dargelegt, erscheint es wahrscheinlich, dass der Einsatz des $SiO_2$-Einsatzmaterials mit Zusatzkomponenten unterschiedlicher Molekülgrößen und Reaktivitäten zu einer Verbreiterung der Partikelgrößenverteilung führt. Zur Veranschaulichung der unterschiedlichen Molekülgrößen ist in **Figur 7** eine Konstitutionsformel des Moleküls D3, und in **Figur 8** eine Konstitutionsformel des Moleküls D7 dargestellt.

Auf molekularer Ebene entstehen $SiO_2$-Agglomerate und -Aggregate unterschiedlicher Größe, deren Größenverteilung ein breiteres Intervall abdeckt. Die tatsächliche Größenverteilung der Sootpartikel ist breiter als eine Größenverteilung von $SiO_2$-Sootpartikeln, die aus reinem D4 erstellt werden. Die breitere Partikelgrößenverteilung ermöglicht die Bildung einer gleichmäßigeren Schüttung, da Hohlräume gleichmäßiger gefüllt werden. Dieses resultiert in einer - makroskopisch betrachteten - geringeren Dichteschwankung innerhalb des $SiO_2$-Sootkörpers. Die im Rahmen der 700 Messpunkten bestimmten Dichten spiegeln also das makroskopisch Resultat der mikroskopische breiteren Partikelgrößenverteilung wieder.

Der Mittelwert der Dichte M ergibt sich aus einer Mittelung über alle 50 Messpunkte, deren geometrische Position entlang der Längsachse des Sootkörpers variiert, nicht aber deren geometrischer Abstand zur Mittelachse. Bei durchschnittlichen Sootkörpern werden durch die computertomografischen Verfahren 50 Querschnitte durch den Sootkörper erzeugt, so dass sich der Mittelwert der Dichte aus einer Mittelung von jeweils 50 Dichtemessungen ergibt. Im Allgemeinen sind die Mittelwerte der Dichte jeweils normal verteilt, so dass eine Breite $\sigma$ bestimmt werden kann. Für die Bestimmung des radialen Dichteprofiles werden in jedem der 50 Schnitte jeweils 14 Messpunkte bestimmt, deren radialer Abstand zum Mittelpunkt des Sootkörpers zunimmt. Die Varianz $\delta$ der Breite $\sigma$ des Mittelwertes M beinhaltet somit eine Statistik von 14 Punkten.

Bei Sootkörpern, die eine konstante Dichteverteilung aufweisen beziehungsweise aufweisen sollen, lassen sich aus den so gewonnenen Messdaten der Mittelwert M der Dichte des Sootkörpers sowie die Breite $\sigma$ des Mittelwertes der Dichten über 50 Messungen ermitteln. Die Größe $\sigma$ zeigt somit an, wie stark die Dichte in einem vorbestimmten Abstand von der Ablagerungsfläche entlang der Längsachse des Sootkörpers schwankt. Zusätzlich ist es möglich noch die Varianz $\delta$ der Breite $\sigma$ aus den 14 Messpunkten die zur Aufnahme des radialen Profils bestimmt wurden, zu berechnen.

Um den Stand der Technik mit den erfindungsgemäß durchgeführten Messungen vergleichbar zu machen, wurden mehrere Sootkörper vermessen. Es wurde dabei versucht die Randbedingungen wie Abstand zum Brenner, Brennertemperatur und Brenngas-Stöchiometrie möglichst konstant zu halten, da diese große Einflüsse auf die jeweilige Dichte der Sootkörper haben. Es wurden jeweils Sootkörper erstellt, die ein lineares Dichteprofil aufwiesen und eine Dichte zwischen 25 und 32 % der Dichte von Quarzglas erreichten. Bei einer Verwendung von bekannten Verfahren bzw. Materialien ergaben sich die folgenden Messwerte für die Breite $\sigma$ und die Varianz $\delta$ der Dichte des Sootkörpers:

$$\sigma_{StdT} = 0,4\ \%$$

und

$$\delta_{StdT} = 0,025\ \%$$

Die Werte sind jeweils angegeben in der relativen Dichte bezogen auf die Dichte von Quarzglas.

Die Zugabe von Zusatzkomponenten D3, D6 und D7 in einem ansonsten dominant aus D4 aufgebauten $SiO_2$-Einsatzmaterial führt zu einer Verbreiterung der Partikelgrößenverteilung. Diese Verbreiterung der Partikelgrößenverteilung führt dazu, dass die Dichteschwankungen in dem Sootkörper an sich kleiner werden. Erstaunlicherweise zeigt es sich auch, dass die Variation der Dichteschwankungen reduziert wurde. Es ergaben sich im Mittel die folgenden Werte für die Breite $\sigma$ und die Varianz $\delta$ der Dichte des Sootkörpers:

$$\sigma_{Inv} = 0,37\ \%$$

und

$$\delta_{Inv} = 0,023\ \%.$$

Auch hier sind die Werte jeweils angegeben in der relativen Dichte bezogen auf die Dichte von Quarzglas. Die Nutzung des erfindungsgemäßen Verfahrens führt damit zu einer Reduktion der gemessenen Dichtenschwankungen um bis zu 9 %. Erstaunlicherweise reduziert sich auch die Variation der Breite um bis zu 8 %. Diese Reduktion der Variation der Schwankungsbreite der mittleren Dichten resultiert in einem wesentlich homogeneren Quarzglas als es im Stand der Technik bekannt ist.

Die in Tabelle 1 aufgeführten Messergebnisse spiegeln sich auch im Diagramm von **Figur 2** wider. Auf der Ordinate ist die Anzahl "A" der Schichten im Sootkörper pro Längeneinheit (in cm) aufgetragen, wie sie aus den CT-Messungen ermittelt werden können, und auf der Abszisse das Verhältnis mD3/mD6 in logarithmischer Auftragung im Bereich von 0,1 bis 1000.

Das Summengewicht (mD3 + mD6) variiert bei diesen Messungen, ebenso der Gewichtsanteil m(D7 und/oder D8), so dass etwaige vorhandene Zusammenhänge zwischen der Zusammensetzung und der Produktqualität durch andere Effekte überdeckt werden können. Dennoch ist grundsätzlich und qualitativ die Tendenz feststellbar, dass in Bezug auf die $SiO_2$-Sootqualität das Verhältnis mD3/mD6 ein relativ ausgeprägtes Optimum im Bereich um 5 bis 10 ergibt, das zu kleineren und zu größeren Verhältniswerten rasch abfällt.

Nur innerhalb eines beschränkten Zusammensetzungs-Fensters lassen sich die erfindungsgemäßen Vorteile realisieren. Bei Variation der Gewichtsverhältnisse über den beanspruchten Bereich hinaus verliert sich der Effekt.

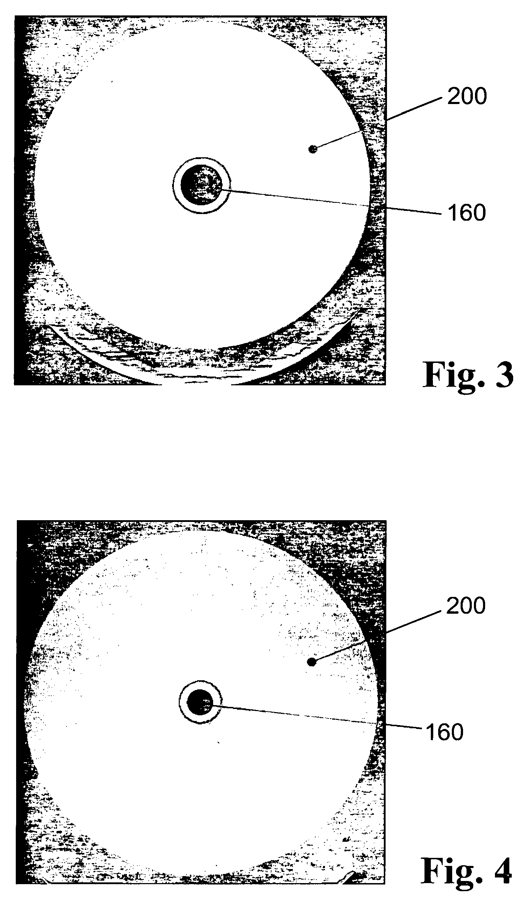

Die **Figuren 3 und 4** zeigen Schichtaufnahmen, die mittels röntgencomputertomographischer Verfahren erstellt wurden. Zu sehen ist jeweils ein Querschnitt durch einen zylinderartig ausgestalteten Quarzglaskörper. Dabei erfolgt der Schnitt quer zur Längsachse des Quarzglaskörpers. Wie dargelegt, erfolgt das Abscheiden der amorphen $SiO_2$-Partikel auf einer Ablagerungsfläche. Diese Ablagerungsfläche ist in den beiden genannten Figuren 3 und 4 jeweils als weißer Ring in der Mitte der ansonsten gräulich dargestellten Quarzglaskörper. Die Ablagerung der $SiO_2$-Partikel erfolgt schichtweise unter Drehung der stabartig ausgebildeten Ablagerungsfläche.

Die CT-Aufnahme von Figur 3 zeigt das unter Einsatz eines $SiO_2$-Einsatzmaterials 105 gemäß Probe Nr. 5 aus Tabelle 1 hergestellte $SiO_2$-Sootrohr. Bei dieser Aufnahmetechnik sind Bereiche mit relativ hoher Dichte als helle Flächenbereiche dargestellt. Es ist erkennbar, dass die Dichte von Innen nach Außen gleichmäßig abnimmt. Radiale Schichten sind kaum zu erkennen. Im Vergleich dazu zeigt Figur 4 eine CT-Aufnahme eines anhand des Standes der Technik mit einem handelsüblichen Einsatzmaterial hergestellten Sootrohres. Anhand von Helligkeitsunterschieden sind radial verlaufende Sichten erkennbar. Der geringere Innendurchmesser bei der Probe gemäß Figur 4 ergibt sich durch den Einsatz eines Trägers mit geringerem Außendurchmesser beim Abscheideprozess zur Herstellung des $SiO_2$-Sootrohres. Durch die Nutzung von Röntgenstrahlung zur Sichtbarmachung des Querschnittes der Quarzglaskörper lassen sich insbesondere Dichtevariationen leicht und eindeutig erkennen. Es ist offensichtlich, dass der Quarzglaskörper, welcher nach bekannten Verfahren hergestellt wurde, eine Mehrzahl von konzentrisch aufgebauten Dichteschwankungsringen aufweist. Solcher Art Dichteschwankungen können insbesondere bei der Nutzung des Quarzglases für optische Fasern Nachteile haben.

Im Gegensatz dazu zeigt die Figur 3 deutlich, dass keine konzentrischen Ringe mehr vorhanden sind, die auf Dichteschwankungen hindeuten würden. So lässt schon eine optische Kontrolle der computertomographisch erstellen Bilder erkennen, dass durch die Nutzung eines Polysiloxangemischs, welches die Zusatzkomponenten D3, D6 und D7 in vorbestimmten Anteilen und Gewichtsverhältnissen enthält Quarzglaskörper erstellt werden können, die eine sehr gleichmäßige Homogenität aufweisen. Die gleichmäßige Homogenität des Quarzglases ist eine direkte Folge der homogenen Verteilung der $SiO_2$-Partikel im Sootkörper. Der Übergang vom $SiO_2$-Sootkörper zum synthetischen Quarzglas findet unter Zuführung von thermischer Energie statt. Im Rahmen dieses als Verglasen bezeichneten Verfahrensschrittes werden im $SiO_2$-Sootkörper vorhandene Fehler oder Dichtevariationen in dem Quarzglas manifestiert. Der Einsatz von Polyalkylsiloxanen mit Zusatzkomponenten führt, wie dargelegt, zu einer Verbreiterung der Partikelgrößenverteilung. Somit kann die Varianz der Dichteschwankungen des Sootkörpers auf nur $\delta_{Inv}$ = 0,023 % reduziert werden. Solcher Art homogene $SiO_2$-Sootkörper lassen sich dann in ebenfalls extrem homogene Quarzglaskörper durch Verglasen umwandeln.

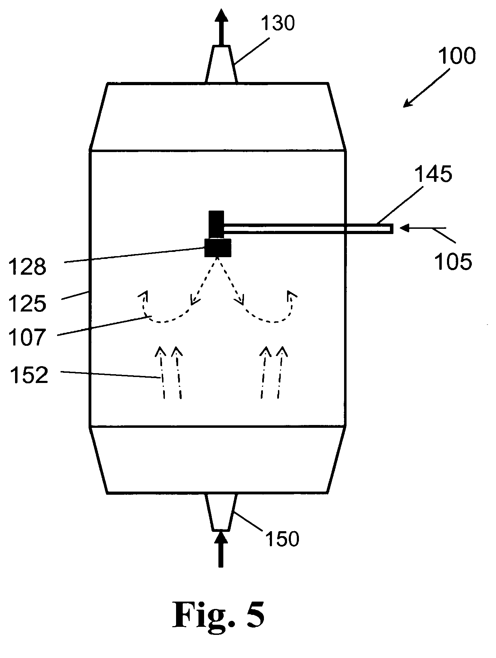

**Figur 5** zeigt das System 100 zur Herstellung von Quarzglas, welches das erfindungsgemäße Verfahren nutzt. Das System 100 weist dazu einen Vorratstank 110 auf, aus dem das flüssige $SiO_2$-Einsatzmaterial 105 mittels einer nicht dargestellten Pumpe in eine Vorheizeinrichtung 115 gepumpt wird. Mittels bekannter Verfahren wird das flüssige $SiO_2$-Einsatzmaterial 105 in der Vorheizeinrichtung 115 auf eine erhöhte Temperatur aufgeheizt. Nach Durchströmen der Vorheizeinrichtung 115 wird das flüssige $SiO_2$-Einsatzmaterial 105 in die Expansionskammer 125 des Verdampfes 120 herein gepumpt. Wie noch näher dargelegt wird, findet in der Expansionskammer 125 der Übergang des flüssigen $SiO_2$-Materials in den gasförmigen $SiO_2$-Einsatzdampf 107 statt. Über eine Leitung 130 strömt der $SiO_2$-Einsatzdampf 107 zu dem Brenner 140, wo eine pyrolytische oder hydrolytische Umsetzung des $SiO_2$-Einsatzdampfes in $SiO_2$-Partikel erfolgt.

Die Vorheizeinrichtung 115 weist einen Zulauf 116 und einen Ablauf 117 auf. Durch den Zulauf 116 wird das $SiO_2$-Einsatzmaterial 105 in der Vorheizvorrichtung 115 zugeführt. Innerhalb der Vorheizeinrichtung 115 findet eine Erwärmung des $SiO_2$-Einsatzmaterials 105 statt. Dieses kann durch die Verwendung eines Heißölsystems oder eines elektrischen Heizelementes in den Wänden der Vorheizeinrichtung erfolgen. Um eine gleichmäßige Aufheizung des flüssigen SiO$_2$-Einsatzmaterials 105 unter Vermeidung heißer Bereiche zu erzielen, hat es sich als vorteilhaft erwiesen, wenn die Vorheizeinrichtung 115 einen Strömungskanal aufweist, welcher von Heißölkanälen umgeben ist. Der so realisierbare flüssig-zuflüssig Hitzetransfer erzielt eine gleichmäßige Erhitzung des flüssigen SiO$_2$-Einsatzmateriales 105. Diese Art der gleichmäßigen Erwärmung stellt sicher, dass es nicht zu einer temperaturbedingten chemischen Umsetzung der D3-, D6 oder D7-Moleküle kommt. Das erhitzte flüssige SiO$_2$-Einsatzmaterial 105 wird von der Vorheizeinrichtung 115 in die Expansionskammer 125 durch eine Zuführungsleitung 145 abgegeben.

Die Expansionskammer 125 definiert ein Innenvolumen für die freie Ausdehnung des SiO$_2$-Einsatzdampfes. Um diese Verdampfung des flüssigen SiO$_2$-Einsatzmaterials in den gasförmigen Einsatzdampf zu erzielen, wird in der Vorheizeinrichtung 115 die Temperatur des flüssigen SiO$_2$-Einsatzmaterials über den Siedepunkt des SiO$_2$-Einsatzmaterials bei dem Betriebsdruck der Expansionskammer erhöht. Eine bevorzugte Betriebstemperatur für die Vorheizeinrichtung 115 beträgt ungefähr 220 °C. Der Siedepunkt von D4 bei Atmosphärendruck beträgt ungefähr 175 °C. Um zu vermeiden, dass das flüssige SiO$_2$-Einsatzmaterial bei 220 °C siedet, ist ein Rückdruck in der Vorheizeinrichtung 115 von ca. 100 kPa erforderlich. Auf diese Weise wird der flüssige Reaktant als eine unterkühlte (komprimierte) Flüssigkeit in der Vorheizeinrichtung 115 gehalten.

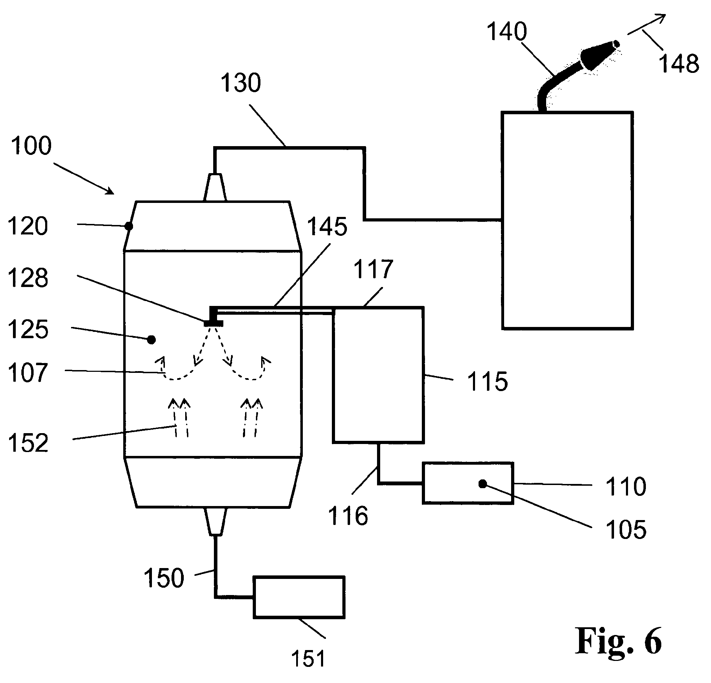

Wie die **Figur 6** verdeutlicht, fließt das flüssige SiO$_2$-Einsatzmaterial aus der Vorheizvorrichtung 115 durch die Zuführungsleitung 145 in den Innenraum der Expansionskammer 125. Die Vorheizeinrichtung 115 heizt das flüssige SiO$_2$-Einsatzmaterial 105 genügend auf, so dass dieser nahezu vollständig verdampft, während dessen Druck beim Eintreten in das Innenvolumen der Expansionskammer 125 abfällt. Eine solche sofortige Verdampfung findet nur dann statt, wenn die Vorheizeinrichtung 115 die Temperatur des flüssigen SiO$_2$-Einsatzmaterials über den Siedepunkt des SiO$_2$-Einsatzmaterials bei dem Betriebsdruck der Expansionskammer 125 erhöht hat. Die Menge des SiO$_2$-Einsatzmaterials 105, das sofort verdampft, hängt somit von der Heizmenge ab, die in der Vorheizeinrichtung 115 dem flüssigen SiO$_2$-Einsatzmaterial zugeführt wird.

Um eine besonders gleichmäßige und vollständige Verdampfung auch der höher siedenden Anteile des SiO$_2$-Einsatzmaterials zu erzielen, ist es vorteilhaft, wenn zusätzlich ein erwärmtes, gasförmiges Verdünnungsmittel in die Kammer eingeführt wird. Das SiO$_2$-Einsatzmaterial weist eine Mehrzahl von Polyalkylsiloxanen, insbesondere D3, D4, D6 und D7. Jedes der genannten Polyalkylsiloxane weist eine unterschiedliche Siedetemperatur und einen unterschiedlichen Dampfdruck auf, wie aus Tabelle 2 ersichtlich.

**Tabelle 2**

| Chemische Bezeichnung | Kurz-Name | Molekül-Formel | Molekulargewicht | $T_b$ [°C] [*1] | $P_v$ [Pa] [*2] |
|---|---|---|---|---|---|
| Hexamethylcyclotrisiloxan | D3 | C6H18 O3Si3 | 222 | 134 | 1700 |
| Octamethylcyclotetra-siloxan | D4 | C8H24 O4Si4 | 297 | 175 | 140 |
| Decamethylcyclopenta-siloxan | D5 | C10H30 O5Si5 | 371 | 211 | 33 |
| Dodecamethylcyclohexasiloxan | D6 | C12H36 O6Si6 | 444 | 245 | 5 |
| Tetradecamethylcycloheptasiloxan | D7 | C14H42 O7Si7 | 519 | 270 | |
| Hexadecamethylcycloocta-siloxan | D8 | C16H48 O8Si8 | 593 | 290 | |
| [*1]: $T_b$, Siedepunkt bei 760 mmHg [*2]: $P_v$; Dampfdruck bei 24 °C | | | | | |

Um die Gewichtsverhältnisse der Zusatzkomponenten nicht zu verändern, ist es wichtig, dass eine vollständige und kongruente Verdampfung des SiO$_2$-Einsatzmaterials stattfindet. Dazu ist es notwendig, dass die zugeführte Hitzemenge sowie die zugeführte Menge an Verdünnungsmittel derart groß sind, dass auch D7, welches die höchste Siedetemperatur aufweist, verdampfen kann. In der Vorheizeinrichtung 115 wird dem SiO$_2$-Einsatzmaterial Wärme zugeführt, um es zu erhitzt. Bei Temperaturen von ca. 250°C kann es aber gegebenenfalls zu Gelbildungen, insbesondere bei den hochsiedenden Polyalkylsiloxanen D7, D8 oder D9 kommen. Um jene hochsiedenden Elemente nicht zur Bildung von Gelen zu veranlassen, ist es vorteilhaft, wenn im Rahmen des Verdampfungsprozesses ein Verdünnungsmittel 152, vorzugsweise ein gasförmiges und auf die gewünschte Verdampfungstemperatur erhitztes Verdünnungsmittel zugeführt wird. Dazu kann durch eine entsprechende Medienleitung 150 das gasförmige Verdünnungsmittel 152 aus einen Vorratsbehälter 151 in die Expansionskammer 125 einströmen.

Als Verdünnungsmittel 152 hat sich insbesondere Stickstoff als vorteilhaft erwiesen. Andere Verdünnungsmittel, wie beispielsweise Argon oder Helium, können ebenfalls verwendet werden, wenn dieses erwünscht ist. Hierbei handelt es sich um Gase, die sich in Bezug auf Polyalkylsiloxane inert verhalten, so dass Oxidations-, Polymerisations- oder Zersetzungsreaktionen zwischen der Flüssigkeit und dem Trägergas, insbesondere unter Druck und höherer Temperatur, und damit eine nicht reproduzierbare Veränderung der Zusammensetzung des Einsatzmaterials vermieden werden. Durch das Hinzuführen des Verdünnungsmittels wird der Partialdruck des flüssigen $SiO_2$-Einsatzmaterials in der Expansionskammer 125 vermindert und so dessen Taupunkt erniedrigt. Dadurch bedarf es keiner hohen Erhitzung des $SiO_2$-Einsatzmaterials in der Vorheizeinrichtung 115. Vielmehr reichen Temperaturen zwischen 150°C und 230°C aus, um eine vollständige Umsetzung des $SiO_2$-Einsatzmaterials in den $SiO_2$-Einsatzdampf sicherzustellen. Ziel ist es dabei, dass das Verdampfen des $SiO_2$-Einsatzmaterials eine Injektionsphase umfasst, in der das Einsatzmaterial in flüssiger Form in feine Tröpfchen zerstäubt wird, und eine Verdampfungsphase, in der die feinen Tröpfchen durch Kontakt mit einem heißen Trägergas, aber ohne Kontakt mit Wandungen, große Oberfläche schnell und effizient vollständig verdampft wird.

Die **Figur 6** verdeutlicht die erfindungsgemäße Verdampfung. Das aufgeheizte $SiO_2$-Einsatzmaterial 105 wird durch die Zuführungsleitung 145 der Expansionskammer 125 zugeführt. Am Ende der Zuführungsleitung 145 im Inneren der Expansionskammer 125 weist die Zuführungsleitung 145 einen düsenartigen Zerstäuberdüse 128 auf. Mittels der Zerstäuberdüse 128 wird das flüssige $SiO_2$-Einsatzmaterial 105 in feine Tropfen zerstäubt, welche einen mittleren Durchmesser von weniger als einem $\mu$m, bevorzugt zwischen 0,5 $\mu$m und 20 nm ($d_{50}$-Wert) aufweisen. Durch den Druckabfall, der beim Austritt aus der Zerstäuberdüse 128 auftritt wird ein wesentlicher Teil des flüssigen Einsatzmaterials in die Gasphase überführt. Zusätzlich wird durch die Medienleitung 150 ein auf ca. 200°C bis ca. 230°C vorgewärmter Stickstoffstrom in die Expansionskammer 125 geleitet. Vorteilhafterweise weist der Stickstoffstrom eine Temperatur auf, die im Wesentlichen - also auf +/- 10°C - der Temperatur des flüssigen $SiO_2$-Einsatzmaterials 105 entspricht. Erfindungsgemäß strömt der Stickstoffstrom der Sprührichtung des flüssigen $SiO_2$-Einsatzmaterials 105 entgegen, um so eine starke Vermischung und eine ausreichende Wärmeübertragung sicherzustellen. Durch die Kombination der beiden Verdampfungsprinzipien - Druckabfall sowie Verdampfung durch den gasförmigen Stickstoff - findet eine vollständige Umsetzung des flüssigen $SiO_2$-Einsatzmaterials 105 in den gasförmigen $SiO_2$-Einsatzdampf 107 statt. Es ist nicht vorgesehen, dass sich Teile des flüssigen $SiO_2$-Einsatzmaterials 105 an den Wänden der Expansionskammer 125 niederschlagen und/oder dort thermisch verdampft werden. Durch die Leitung 130 findet der Abfluss des gasförmigen $SiO_2$-Einsatzdampfes 107 zu dem Brenner 140 statt. Im Brenner 140 wird der $SiO_2$-Einsatzdampfes 107 durch Pyrolyse, Oxidation oder Hydrolyse zu $SiO_2$-Partikel 148 - auch als $SiO_2$ oder Soot oder $SiO_2$-Soot bezeichnet - umgesetzt.

Das Größenspektrum der Tröpfchen hängt von einer Vielzahl an Einflussgrößen ab. Neben den rheologischen Eigenschaften der Flüssigkeit und der Geometrie der Zerstäubungsdüse 128 ist dies insbesondere die Austrittsgeschwindigkeit der Flüssigkeit aus der Zerstäubungsdüse, die im Wesentlichen von der Druckdifferenz bestimmt wird. Innerhalb des genannten Druckdifferenzbereichs zerfällt der austretende Flüssigkeitsstrahl aufgrund turbulenter Strömung zu feinen Tropfen mit enger Tropfengrößenverteilung.

Bei einer anderen Verfahrensvariante ist vorgesehen, dass das Bilden des Stroms des $SiO_2$- Einsatzmaterials ein Erzeugen eines ersten Gasstroms durch Verdampfen einer Mischung von Polyalkylsiloxanen umfasst, die D3, D4, D5 und D6 enthält, und ein Erzeugen eines zweiten Gasstroms durch Verdampfen einer zweiten Mischung von Polyalkylsiloxanen, die im Wesentlichen D3, D4, D5, D6 und D7 enthält, sowie ein Zusammenführen der Gasströme vor oder während Verfahrensschritt (C). Durch den Einsatz separater Verdampfer für unterschiedliche Komponenten des Einsatzmaterials können die Verdampfungsparameter, wie Verdampfungstemperatur und Verdampfungsrate, individuell an die zu verdampfenden Komponenten angepasst und optimiert werden.

Bezugszeichenliste

| | |
|---|---|
| 100 | System |
| 105 | $SiO_2$-Einsatzmaterial |
| 107 | $SiO_2$-Einsatzdampf |
| | |
| 110 | Vorratstank / Vorratsbehälter |
| 115 | Vorheizeinrichtung |
| 116 | Zulauf |
| 117 | Ablauf |
| | |
| 120 | Verdampfer / Verdampfersystem |

122    Flüssigkeitspumpe
123    Durchflussmessgerät
124    MFC (mass flow controller)
125    Expansionskammer / Verdampfungskammer
128    Zerstäuberdüse

130    Leitung

140    Brenner / Flammhydrolysebrenner
141    Brennerblock
142    Bewegung von 140
143    Brennerflamme
145    Zuführungsleitung
148    $SiO_2$-Soot

150    Medienleitung
151    Vorratsbehälter
152    Verdünnungsmittel

160    Ablagerungsfläche / Trägerrohr
161    Längsachse von 160

200    Sootkörper

**Patentansprüche**

1.  Verfahren zur Herstellung von synthetischem Quarzglas, umfassend die Verfahrensschritte:

    (a) Bereitstellen eines flüssigen $SiO_2$-Einsatzmaterials (105), das als Hauptkomponente Octamethylcyclotetrasiloxan D4 enthält,
    (b) Verdampfen des $SiO_2$-Einsatzmaterials (105) in einen Einsatzmaterialdampf (107),
    (c) Umsetzen des Einsatzmaterialdampfes zu $SiO_2$-Partikeln (148),
    (d) Abscheiden der $SiO_2$-Partikel (148) auf einer Ablagerungsfläche (160) unter Bildung eines porösen $SiO_2$-Sootkörpers (200),
    (e) Verglasen des $SiO_2$-Sootkörpers (200) unter Bildung des synthetischen Quarzglases,

    **dadurch gekennzeichnet, dass** das flüssige Einsatzmaterial (105) Zusatzkomponenten enthält, umfassend Hexamethylcyclotrisiloxan D3 und dessen lineares Homolog mit einem Gewichtsanteil mD3, Dodecamethylcyclohexasiloxan D6 und dessen lineares Homolog mit einem Gewichtsanteil mD6 sowie Tetradekamethylcycloheptasiloxan D7 und/oder Hexadecamethylcyclooctasiloxan D8 und deren lineare Homologe mit einem Gewichtsanteil m(D7 und/oder D8), wobei das Gewichtsverhältnis mD3/mD6 in einem Bereich zwischen 0,05 und 90 liegt und der Gewichtsanteil m(D7 und/oder D8) mindestens 20 Gew.-ppm beträgt.

2.  Verfahren nach Anspruch 1, **dadurch gekennzeichnet, dass** das Verhältnis mD3/mD6 im Bereich zwischen 0,1 und 40, liegt.

3.  Verfahren nach Anspruch 1 oder 2, **dadurch gekennzeichnet, dass** der Gewichtsanteil m(D7 und/oder D8) im Bereich zwischen 30 und 100 Gew.-ppm liegt.

4.  Verfahren nach einem der vorhergehenden Ansprüche, **dadurch gekennzeichnet, dass** die Summe der Gewichtsanteile mD3 + mD6 im Bereich zwischen 200 und 20.000 Gew.-ppm, bevorzugt zwischen 500 und 15.000 Gew.-ppm liegt.

5.  Verfahren nach einem der vorhergehenden Ansprüche, **dadurch gekennzeichnet, dass** mD3 im Bereich zwischen 200 Gew.-ppm und 15.000 Gew.-ppm liegt, und dass mD6 im Bereich zwischen 50 Gew.-ppm und 2.000 Gew.-ppm liegt.

**6.** Verfahren nach einem der vorhergehenden Ansprüche, **dadurch gekennzeichnet, dass** das Verdampfen die Schritte umfasst:

• Erhitzen des flüssigen $SiO_2$-Einsatzmaterials (105),
• Einführen des erhitzten $SiO_2$-Einsatzmaterials (105) in eine Expansionskammer (125), so dass zumindest ein erster Teil des $SiO_2$- Einsatzmaterials (105) in Folge eines Druckabfalls verdampft,
• Vermischen des $SiO_2$-Einsatzmaterials (105) mit einem erhitzten Verdünnungsmittel (152), so dass zumindest ein zweiter Teil des $SiO_2$-Einsatzmaterials (105) in Folge einer Senkung des Taupunktes verdampft.

**7.** Verfahren nach Anspruch 6, **dadurch gekennzeichnet, dass** das Einführen des erhitzten $SiO_2$-Einsatzmaterials (105) in der Expansionskammer (125) eine Injektionsphase umfasst, in der das $SiO_2$-Einsatzmaterial (105) in flüssiger Form in feine Tröpfchen zerstäubt wird, wobei die Tröpfchen einem mittleren Durchmesser von weniger als 5 $\mu$m, vorzugsweise weniger als 2 $\mu$m, aufweisen.

**8.** Verfahren nach Anspruch 6 oder 7, **dadurch gekennzeichnet, dass** der Kontakt der feinen Tröpfchen mit dem heißen Trägergas (152) in einer Kammer (125) erfolgt, die auf einer Temperatur im Bereich von 150°C bis 230°C gehalten wird.

**9.** Verfahren nach einem der Ansprüche 6 bis 8, **dadurch gekennzeichnet, dass** beim Einführen des $SiO_2$-Einsatzmaterials (105) in die Expansionskammer (125) eine Zusammensetzung des $SiO_2$-Einsatzmaterials mittels eines Konzentrationsdetektors gemessen wird.

**10.** Verfahren nach einem der vorhergehenden Ansprüche, **dadurch gekennzeichnet, dass** das Bereitstellen eines flüssigen $SiO_2$-Einsatzmaterials (105) gemäß Verfahrensschritt (a) umfasst:

• ein Bereitstellen einer ersten Mischung von Polyalkylsiloxanen, in der D3, D4, Dekamethylcyclopentasiloxan, D5, D6 und deren lineare Homologen mindestens 99 Gew.-% stellen,
• ein Bereitstellen einer zweiten Mischung von Polyalkylsiloxanen, in der D7 einen Anteil von mindestens 5.000 Gew.-ppm, vorzugsweise mindestens 10.000 Gew.-ppm, besonders bevorzugt mindestens 20.000 Gew.-ppm, stellt.
• Herstellen eines Verschnitts aus erster und zweiter Mischung von Polyalkylsiloxanen vor dem oder beim Verdampfen gemäß Verfahrensschritt (b) in einem Mischungsverhältnis, das zu einem Gewichtsanteil für m(D7 und/oder D8) von mindestens 20 Gew.-ppm in der Gesamtmischung führt.

**11.** Verfahren nach einem der vorhergehenden Ansprüche, **dadurch gekennzeichnet, dass** das Abscheiden der $SiO_2$-Partikel auf der Ablagerungsfläche (160) gemäß Verfahrensschritt (d) erfolgt, indem der Einsatzmaterialdampf (107) einer Vielzahl in einer Brennerreihe (141) angeordneter Abscheidebrenner (140) zugeführt wird, die gemeinsam reversierend entlang der Ablagerungsfläche (160) bewegt werden.

## Claims

**1.** A method for producing synthetic quartz glass, comprising the steps of:

(a) providing a liquid $SiO_2$ feedstock material (105), which contains octamethylcyclotetrasiloxane D4 as the main component,
(b) vaporizing the $SiO_2$ feedstock material (105) into a feedstock material vapor (107),
(c) converting the feedstock material vapor into $SiO_2$ particles (148),
(d) depositing the $SiO_2$ particles (148) on a deposition surface (160) so as to form a porous $SiO_2$ soot body (200),
(e) vitrifying the $SiO_2$ soot body (200) so as to form the synthetic quartz glass, **characterized in that** the liquid feedstock material (105) contains additional components comprising hexamethylcyclotrisiloxane D3 and the linear homolog thereof with a weight fraction mD3, dodecamethylcyclohexasiloxane D6 and the linear homolog thereof with a weight fraction mD6, and tetradecamethylcycloheptasiloxane D7 and/or hexadecamethylcyclooctasiloxane D8 and the linear homologs thereof with a weight fraction m(D7 and/or D8), wherein the weight ratio mD3/mD6 is in a range between 0.05 and 90 and the weight fraction m(D7 and/or D8) is at least 20 wt. ppm.

**2.** The method according to claim 1, **characterized in that** the ratio mD3/mD6 is in the range between 0.1 and 40.

3. The method according to claim 1 or 2, **characterized in that** the weight fraction m(D7 and/or D8)is in the range between 30 and 100 wt. ppm.

4. The method according to any one of the preceding claims, **characterized in that** the sum of the weight fractions mD3 + mD6 is in the range between 200 and 20,000 wt. ppm, preferably between 500 and 15,000 wt. ppm.

5. The method according to any one of the preceding claims, **characterized in that** mD3 is in the range between 200 wt. ppm and 15,000 wt. ppm, and that mD6 is in the range between 50 wt. ppm and 2,000 wt. ppm.

6. The method according to any one of the preceding claims, **characterized in that** vaporizing comprises the steps of:

   • heating the liquid $SiO_2$ feedstock material (105),
   • introducing the heated $SiO_2$ feedstock material (105) into an expansion chamber (125), so that at least a first part of the $SiO_2$ feedstock material (105) vaporizes due to a pressure drop,
   • mixing the $SiO_2$ feedstock material (105) with a heated diluent (152), so that at least a second part of the $SiO_2$ feedstock material (105) vaporizes due to a decrease in the dew point.

7. The method according to claim 6, **characterized in that** introducing the heated $SiO_2$ feedstock material (105) into the expansion chamber (125) comprises an injection phase in which the $SiO_2$ feedstock material (105) is atomized in liquid form into fine droplets, the droplets having a mean diameter of less than 5 $\mu$m, preferably of less than 2 $\mu$m.

8. The method according to claim 6 or 7, **characterized in that** the contact of the fine droplets with the hot carrier gas (152) takes place in a chamber (125) which is kept at a temperature in the range of 150°C to 230°C.

9. The method according to any one of claims 6 to 8, **characterized in that** during introduction of the $SiO_2$ feedstock material (105) into the expansion chamber (125) a composition of the $SiO_2$ feedstock material is measured by means of a concentration detector.

10. The method according to any one of the preceding claims, **characterized in that** providing a liquid $SiO_2$ feedstock material (105) according to method step (a) comprises:

   • providing a first mixture of polyalkylsiloxanes in which D3, D4, decamethylcyclopentasiloxane D5, D6 and the linear homologs thereof account for at least 99 wt. %,
   • providing a second mixture of polyalkylsiloxanes in which D7 accounts for an amount of at least 5,000 wt. ppm, preferably at least 10,000 wt. ppm, particularly preferably at least 20,000 wt. ppm,
   • producing a blend from the first and second mixture of polyalkylsiloxanes prior to or during vaporization according to method step (b) in a mixing ratio leading to a weight fraction for m(D7 and/or D8) of at least 20 wt. ppm in the total mixture.

11. The method according to any one of the preceding claims, **characterized in that** the $SiO_2$ particles are deposited on the deposition surface (160) according to method step (d) **in that** the feedstock material vapor (107) is supplied to a plurality of deposition burners (140) arranged in a burner row (141), which are moved jointly reversingly along the deposition surface (160).

**Revendications**

1. Procédé pour la fabrication de verre de quartz, comprenant les étapes de procédé suivantes :

   (a) préparation d'un matériau liquide de $SiO_2$ (105), dont le principal composant est l'octaméthylecyclotétrasiloxane D4,
   (b) évaporation du matériau liquide $SiO_2$ (105) en un matériau sous forme de vapeur (107),
   (c) transformation de la vapeur de $SiO_2$ (107) en particules de de $SiO_2$ (148),
   (d) précipitation des particules de $SiO_2$ (148) sur une surface de déposition (160) en formant un corps de suie de $SiO_2$ (200),
   (e) vitrification du corps de suie $SiO_2$ (200) en formant un verre de quartz synthétique,

   **caractérisé en ce que** le matériau liquide de $SiO_2$ (105) présente au moins des composants supplémentaires, tels que l'héxaméthylecyclotrisiloxane D3 et son homologue linéaire avec une part pondérale mD3, le dodécaméthylecyclohéxasiloxane D6 et son homologue linéaire avec une part pondérale mD6 ainsi que le tétradécaméthylecycloheptasiloxane D7 et/ou l'héxaméthylecyclooctasiloxane D8 et son homologue linéaire dans une part pondérale m(D7 et/ou D8), le rapport pondéral mD3/mD6 étant compris entre 0,05 et 90 et la part pondérale m(D7 et/ou D8) s'élevant à au moins 20 % en poids.

2. Procédé selon la revendication 1, **caractérisé en ce que** le rapport mD3/md6 est compris entre 0,1 et 40

3. Procédé selon la revendication 1 ou 2, **caractérisé en ce que** le rapport pondéral m(D7 et/ou D8) est compris entre 30 et 100 ppm en poids.

4. Procédé selon l'une des revendications précédentes, **caractérisé en ce que** la somme des parts pondérales mD3 + mD6 est comprise entre 200 et 20000 ppm en poids, de préférence entre 500 et 15000 ppm en poids.

5. Procédé selon l'une des revendications précédentes, **caractérisé en ce que** mD3 est comprise entre 200 et 15000 ppm en poids, et mD6 entre 50 et 2000 ppm en poids.

6. Procédé selon l'une des revendications précédentes, **caractérisé en ce que** l'évaporation comprend les étapes suivantes :

   • chauffage du matériau liquide de $SiO_2$ (105),
   • introduction du matériau liquide de $SiO_2$ (105) dans une chambre d'expansion (125), de sorte qu'une première partie du matériau liquide de $SiO_2$ (105) s'évapore à la suite d'une chute de pression.
   • mélange du matériau liquide de $SiO_2$ (105) avec un diluant chauffé (152) de sorte qu'au moins une seconde partie du matériau liquide de $SiO_2$ (105) s'évapore à la suite d'une réduction du point de rosée.

7. Procédé selon la revendication 6, **caractérisé en ce que** l'introduction du matériau liquide de $SiO_2$ (105) dans la chambre d'expansion (125) comprend une phase d'injection dans laquelle le matériau liquide de $SiO_2$ (105) est pulvérisé sous forme liquide en fines gouttelettes, les gouttelettes présentant un diamètre moyen inférieur à 5 $\mu$m, de préférence inférieur à 2 $\mu$m

8. Procédé selon la revendication 6 ou 7, **caractérisé en ce que** le contact de fines gouttelettes s'effectue avec un gaz porteur chaud (152) dans une chambre (125), qui est maintenue à une température comprise entre 150°C et 230°C.

9. Procédé selon l'une des revendications 6 à 8, **caractérisé en ce que** pendant l'introduction du matériau liquide de $SiO_2$ (105), dans la chambre d'expansion (125), une composition du matériau liquide de $SiO_2$ (105) est mesurée au moyen d'un détecteur de concentration.

10. Procédé selon l'une des revendications précédentes, **caractérisé en ce que** la préparation d'un matériau liquide de $SiO_2$ (105) selon l'étape de procédé (a) comprend les étapes suivantes :

    • préparation d'un premier mélange de polyalkylsiloxanes, dans lequel D3, D4, le décaméthylecyclotétrasiloxane D5, D6 et leurs homologues linéaires représentent au moins 99 % du poids,
    • préparation d'un second mélange de polyalkylsiloxanes, dans lequel D7 présente une part pondérale d'au moins 5000 ppm en poids, de préférence au moins 10000 ppm en poids, de préférence au moins 20000 ppm en poids,
    • réalisation d'un coupage du premier et second mélange de polyalkylsiloxanes avant ou pendant l'évaporation selon l'étape de procédé (b) dans un rapport de mélange pour obtenir une part pondérale m(D7 et/ou D8) d'au moins 20 ppm en poids dans l'ensemble du mélange.

11. Procédé selon l'une des revendications précédentes, **caractérisé en ce que** la précipitation des particules de $SiO_2$ sur la surface de déposition (160) s'effectue selon l'étape de procédé (d), dans laquelle le matériau sous forme vapeur (107) est amené à un grand nombre de brûleurs à précipitation (140) disposés en série (141), lesquels sont déplacés ensemble dans un mouvement alternatif le long de la surface de déposition (160).

Fig. 1

**Fig. 2**

**Fig. 7**

**Fig. 8**

**Fig. 3**

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5043002 A
- DE 102007024725 A1
- DE 4204406 A1
- EP 673888 A1
- EP 463045 A1
- US 5879649 A
- DE 10302914 A1
- EP 908418 A1
- DE 19501733 A1
- US 5356451 A1
- DE 2435704 A1